# EUROPEAN PATENT SPECIFICATION

(11) **EP 4 307 080 B1**
(45) Date of publication and mention of the grant of the patent: **02.09.2026**
(21) Application number: 22776149.1
(22) Date of filing: 25.03.2022
(51) Int. Cl.: H01F 7/02, H01F 7/06, G06F 1/16

(54) **MAGNETIC MEMBER COMBINING ELECTROMAGNET AND PERMANENT MAGNET, AND ELECTRONIC DEVICE COMPRISING SAME**
MAGNETISCHES ELEMENT MIT KOMBINATION AUS ELEKTROMAGNET UND PERMANENTMAGNET UND ELEKTRONISCHE VORRICHTUNG DAMIT
ÉLÉMENT MAGNÉTIQUE COMBINANT UN ÉLECTROAIMANT ET UN AIMANT PERMANENT, ET DISPOSITIF ÉLECTRONIQUE LE COMPRENANT

(30) Priority: 25.03.2021 KR 20210038951
(43) Date of publication of application: 17.01.2024
(73) Proprietor: Samsung Electronics Co., Ltd., Suwon-si, Gyeonggi-do 16677 (KR)
(72) Inventor: CHO, Gyuyeong, Suwon-si Gyeonggi-do 16677 (KR); LIM, Jaedeok, Suwon-si Gyeonggi-do 16677 (KR)
(74) Representative: Gulde & Partner
(86) International application number: PCT/KR2022/004220
(87) International publication number: WO 2022/203449

(56) References cited:
- KR-A- 20170 069 115
- KR-A- 20190 043 826
- KR-A- 20190 043 826
- KR-A- 20210 015 468
- KR-A- 20210 031 348
- KR-A- 20210 031 348
- US-A1- 2016 278 222
- US-A1- 2018 074 545
- US-A1- 2018 329 460

## Description

### [Technical Field]

The disclosure relates to a magnetic member in which an electromagnet and a permanent magnet are coupled to each other, and an electronic device including the same.

### [Background Art]

Magnets are used in a variety of electronic devices such as a speaker, a smartphone, a tablet personal computers (PC), a wearable device, or a home appliance (e.g., a refrigerator, a microwave, a washing machines, or an audio system). For example, a rollable electronic device may include a magnet to facilitate opening, closing, or stopping of the rollable electronic device. In addition, a foldable electronic device may include a magnet to maintain a folded state.

An electromagnet may refer to a magnet in which magnetic force is generated by forming a magnetic field around a conducting wire when a current flows through the conducting wire. The direction or strength of the formed magnetic field may vary depending on the flowing direction or strength of the current. The magnetic force of the electromagnet may be in proportion to the square of the strength of the current. In that regard, a prior art publication of KR 2019 0043826 A discloses a foldable display device to prevent stress concentration and wrinkles from being generated in the panel part in a region that is folded and unfolded.

### [Disclosure of Invention]

### [Technical Problem]

An electromagnet may be used as a magnetic member used in an electronic device. A magnetic member configured only with an electromagnet may have a small change in the strength of magnetic force that can be obtained when the strength of current is small. Accordingly, an electronic device using a magnetic member configured only with an electromagnet may be poor in drivability. For example, when using a rollable electronic device in an open state, a display may be rolled up due to inertia. In addition, in a low-temperature state, the repulsive force between displays of a foldable electronic device increases, so strong magnetic force may be required when the electronic device maintains a closed state.

Various embodiments disclosed herein may include a magnetic member for the convenience of driving an electronic device as defined in the appended claims. Therefore, a large amount of change in the strength of magnetic force may be obtained with a small strength of current by using the magnetic force formed by the permanent magnet. Furthermore, various embodiments disclosed herein are capable of improving the driving convenience of an electronic device by adjusting the strength of the magnetic force of the magnetic member.

### [Solution to Problem]

An electronic device according to various embodiments of the disclosure may include a flexible display, a housing accommodating the flexible display and constituting at least a portion of an exterior of the electronic device, at least one magnetic member disposed inside the housing, and at least one processor. The magnetic member may include a first permanent magnet, and an electromagnet including a core extending in a first direction from one surface of the first permanent magnet and a coil disposed inside the core to induce a magnetic field in the first direction or in a direction opposite to the first direction. With respect to the one surface facing the core, the first permanent magnet may have at least one of a height greater than or equal to a height of the one surface or a width greater than or equal to a width of the one surface, and the at least one processor may be configured to control at least one of the strength or the direction of current flowing through the coil. An electronic device according to the invention is defined in independent claim 1.

A magnetic member according to various embodiment of the disclosure may include a first permanent magnet, and an electromagnet including a core extending in a first direction from one surface of the first permanent magnet and a coil disposed inside the core to induce a magnetic field in the first direction or in a direction opposite to the first direction. With respect to one surface facing the core, the first permanent magnet may have at least one of a height greater than or equal to a height of the one surface or a width greater than or equal to a width of the one surface.

### [Advantageous Effects of Invention]

Based on the above discussion, according to an embodiment of the disclosure, by using a magnetic member in which a permanent magnet is coupled to an electromagnet, it is possible to obtain a large amount of change in the strength of the magnetic force of the magnetic member by using the small strength of current.

Furthermore, an electronic device according to an embodiment of the disclosure may include at least one sensor and at least one processor electrically connected to the sensor. The at least one sensor and the at least one processor are capable of adjusting the strength of the magnetic force of the magnetic member by adjusting the strength or the direction of the current flowing through the coil of the electromagnet. With an electronic device according to an embodiment of the disclosure, it is possible to improve a user's usability of the electronic device by adjusting the strength of magnetic force.

### [Brief Description of Drawings]

FIG. 1 is a front perspective view of an electronic device according to an embodiment in a first state.
FIG. 2 is a front perspective view of the electronic device according to an embodiment in a second state.
FIG. 3 illustrates a plan view of an electronic device including a magnetic member according to an embodiment and a cross-sectional view of the electronic device taken along a line A-A'.
FIG. 4 illustrates a perspective view and a cross-sectional view of a magnetic force member and supporting blocks according to an embodiment.
FIG. 5 is a cross-sectional view illustrating the magnetic force and magnetic field of a magnetic member according to an embodiment.
FIG. 6 is a view illustrating an electronic device according to an embodiment in the unfolded state.
FIG. 7 is a view illustrating the electronic device according to an embodiment in the folded state.
FIG. 8 is an exploded perspective view of the electronic device according to an embodiment.
FIG. 9 is a perspective view illustrating an electronic device including a magnetic member according to an embodiment.
FIG. 10 is a block diagram illustrating an exemplary configuration of an electronic device according to an embodiment.
FIG. 11 is a flowchart illustrating a method of adjusting the strength of magnetic force of a magnetic member according to an embodiment.
FIG. 12 is a flowchart illustrating a method of adjusting the strength of magnetic force of a magnetic member depending on the position of a housing according to an embodiment.
FIG. 13 is a conceptual view illustrating a configuration for adjusting the strength of magnetic force of a magnetic member according to an operation of an electronic device according to an embodiment.

### [Mode for Carrying out the Invention]

Hereinafter, various embodiments of the disclosure will be described with reference to the accompanying drawings. With regard to the description of the drawings, the same or like reference signs may be used to designate the same or like elements.

As used herein, the expression "have", "may have", "include", or "may include" refers to the existence of a correspoding feature (e.g., numeral, function, operation, or constituent element suh as component) and does not exclude the existence of additional features.

As used herein, the expression "A or B", "at least one of A and/or B", or "one of more of A and/or B" may include all possible combinations of items enumerated together. For example, "A or B", ""at least one of A and B", or "at least one of A or B" may refer to all of (1) including at least one A, (2) including at least one B, or (3) including all of at least one A and at least one B.

The expressions "a first", "a second", "the first", "the second", and the like as used in various embodiments may modify various elements regardless of the order and/or the importance thereof, and do not limit the corresponding elements. These expressions may be used to distinguish between one element and any other element. For example, a first element may be termed a second element, and similarly, a second element may be termed a first element without departing from the scope of the disclosure.

It should be understood that when an element (e.g., first element) is referred to as being (operatively or communicatively) "coupled with/to" or "connected to" another element (e.g., second element), it may be directly connected or coupled directly to the other element or any other element (e.g., third element) may be interposer between them. In contrast, it should be understood that when an element (e.g., first element) is referred to as being "directly connected" or "directly coupled" to another element (second element), there are no element (e.g., third element) interposed between them.

The expression "configured to" used in the disclosure may be interchangeably used with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g., embedded processor) only for performing the corresponding operations or a generic-purpose processor (e.g., central processing unit (CPU) or application processor (AP)) that can perform the corresponding operations by executing one or more software programs stored in a memory device.

The terms used in the disclosure are only used to describe specific embodiments, and are not intended to limit the disclosure. A singular expression may include a plural expression unless they are definitely different in a context. Unless defined otherwise, all terms used herein, including technical and scientific terms, have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

An electronic device according to various embodiments of the disclosure may include at least one of, for example, a smart phone, a tablet personal computer (PC), a mobile phone, a video phone, an electronic book reader (e-book reader), a desktop PC, a laptop PC, a netbook computer, a workstation, a server, a personal digital assistant (PDA), a portable multimedia player (PMP), a MP3 player, a mobile medical device, a camera, and a wearable device (e.g., smart glasses, head-mounted device (HMD)), electronic clothing, electronic bracelet, electronic necklace, electronic accessory (appcessory), electronic tattoo, smart mirror, or smart watch).

In some embodiments, the electronic device may be a smart hole appliance. The smart home appliance may include at least one of, for example, a television, a digital video disk (DVD) player, an audio, a refrigerator, an air conditioner, a vacuum cleaner, an oven, a microwave oven, a washing machine, an air purifier, a set-top box, a home automation control panel, a security control panel, a TV box (e.g., Samsung HomeSyncTM, Apple TVTM, or Google TVTM), a game console (e.g., XboxTM or PlayStationTM), an electronic dictionary, an electronic key, a camcorder, and an electronic photo frame.

In other embodiments, the electronic device may include at least one of various medical devices (e.g., various portable medical measuring devices (blood glucose monitoring device, heart rate monitoring device, blood pressure measuring device, body temperature measuring device, etc.), magnetic resonance angiography (MRA), magnetic resonance imaging (MRI), computed tomography (CT) machine, ultrasonic machine, etc.), a navigation device, a global positioning system (GPS) receiver, an event data recorder (EDR) , a flight data recorder (FDR) , a vehicle infotainment device, electronic equipment for a ship (e.g., ship navigation device, gyro-compass, etc.), avionics, a security device, an automobile head unit, a home or industrial robot, an automatic teller's machine (ATM) in banks, point of sales (POS) in a shop, or Internet of things devices (e.g., light bulb, various sensors, electric or gas meter, sprinkler device, fire alarm, thermostat, streetlamp, toaster, sporting goods, hot water tank, heater, boiler, etc.).

According to some embodiments, the electronic device may include at least one of a part of furniture or a building/structure, an electronic board, an electronic signature receiving device, a projector, and various kinds of measuring instruments (e.g., water meter, electric meter, gas meter, radio wave meter, etc.). In various embodiments, the electronic device may be a combination of one or more of the aforementioned various devices. According to some embodiments, the electronic device may a flexible electronic device. Further, the electronic device according to an embodiment of the disclosure is not limited to the aforementioned devices, and may include a new electronic device according to the development of technology.

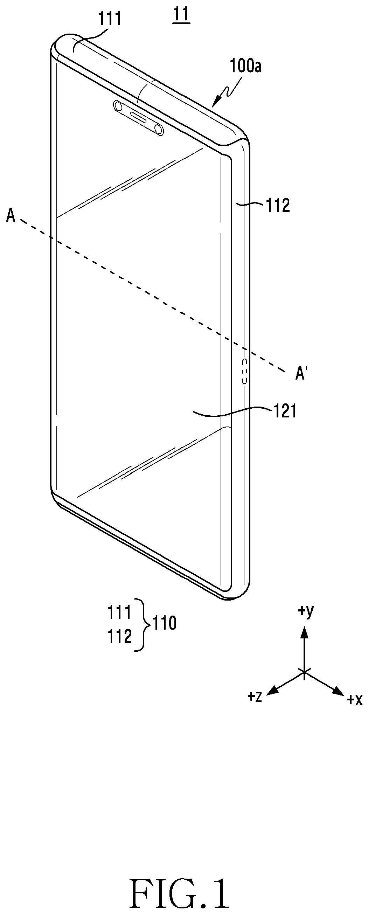

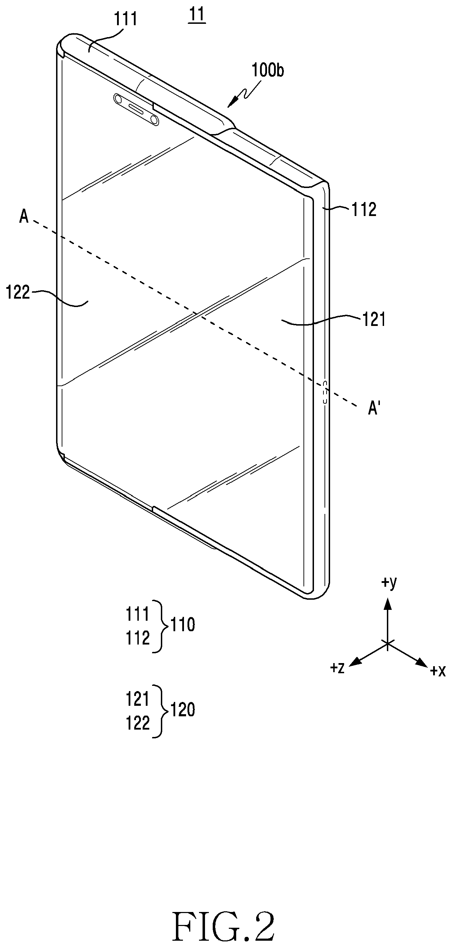

Referring to FIGS. 1 and 2, a flexible display 120 may be located on at least a portion of an electronic device 11 according to an embodiment. In an embodiment, the flexible display 120 may include at least some flat shapes and at least some curved shapes.

According to an embodiment, on the front surface of the electronic device 11, the flexible display 120 and a slidable housing 110 surrounding at least a portion of the periphery of the flexible display 120 may be disposed.

According to an embodiment, the slidable housing 110 may define a partial area of a front surface (e.g., the surface of the electronic device 11 oriented in the +z direction in FIGS. 1 and 2), a rear surface (e.g., the surface of the electronic device 11 oriented in the -z direction in FIGS. 1 and 2), and a side surface (e.g., the surface connecting the front and rear surfaces of the electronic device 11) of the electronic device 11. According to another embodiment, the slidable housing 110 may define a partial area of the side surface and the rear surface of the electronic device 11.

According to an embodiment, the slidable housing 110 may include a first housing 111 and a second housing 112 coupled to the first housing 111 to be movable with respect to the first housing 111 within a predetermined range.

According to an embodiment, the flexible display 120 may include a first portion 121 that is couplable to the second housing 112 and a second portion 122 that extends from the first portion 121 and is slidable into the electronic device 11.

According to an embodiment, the electronic device 11 may have a first state 100a and a second state 100b. For example, the first state 100a and the second state 100b of the electronic device 11 may be determined depending on the relative position of the second housing 112 with respect to the slidable housing 110, and the electronic device 11 may be configured to be transformable between the first state and the second state by a user's manipulation or mechanical operation.

According to various embodiments, the first state 100a of the electronic device 11 may refer to the state before the slidable housing 110 is expanded. The second state 100b of the electronic device may refer to the state in which the slidable housing 110 is expanded.

According to an embodiment, when the state of the electronic device 11 is switched from the first state 100a to the second state 100b according to the movement of the second housing 112, the second portion 122 of the flexible display 120 may be slid out (or exposed) from the interior to the exterior of the electronic device 11. According to various embodiments, when the flexible display 120 is slid out (or exposed), it may mean that the flexible display is viewed from outside the electronic device 11. In another embodiment, when the electronic device 11 is switched from the second state 100B to the first state 100A according to the movement of the second housing 112, the second portion 122 of the flexible display 120 may be slid into the electronic device 11. In various embodiments, when the flexible display 120 is slid into the electronic device 11, it may mean that the flexible display 120 is not viewed from outside of the electronic device 11.

According to an embodiment, the distance between the first housing 111 and the second housing 112 may increase or decrease depending on the movement of the second housing 112 relative to the first housing 111. In various embodiments of the disclosure, the distance between the first housing 111 and the second housing 112 may be defined as a distance between a point on the first housing 111 and a point on the second housing 112. For example, when the electronic device 11 includes a distance sensor (e.g., a proximity sensor or a time of flight (TOF) sensor) disposed inside the second housing 112 and the first housing 111 includes an object that reflects light of the distance sensor, the distance between the first housing 111 and the second housing 112 may be defined as the distance between the distance sensor disposed inside the second housing 112 and the object of the first housing 111. The electronic device 11 may be configured to detect the relative position between the first housing 111 and the second housing 112 via a component other than the distance sensor.

According to an embodiment, when the second housing 112 moves in the -x-axis direction with respect to the first housing 111, the display 120 may be expanded. According to an embodiment, when the second housing 112 moves in the x-axis direction with respect to the first housing 111, the display 120 may be contracted. In various embodiments of the disclosure, when the housing 110 or the display 120 are contracted or expanded, it may mean that the size of the portion visually exposed to the outside from the entire area of the housing 110 or the display 120 is contracted or expanded depending on the movement of the second housing 112 with respect to the first housing 111.

In various embodiments of the disclosure, the state in which the display 120 is maximally contracted may be referred to as a contracted state (or a maximally contracted state). The state in which the display 120 is maximally expanded may be referred to as an expanded state (or a maximally expanded state). In addition, when the display 120 is in a state between the maximally expanded state and the maximally contracted state, it may be referred to as an intermediately expanded state (or an intermediate state).

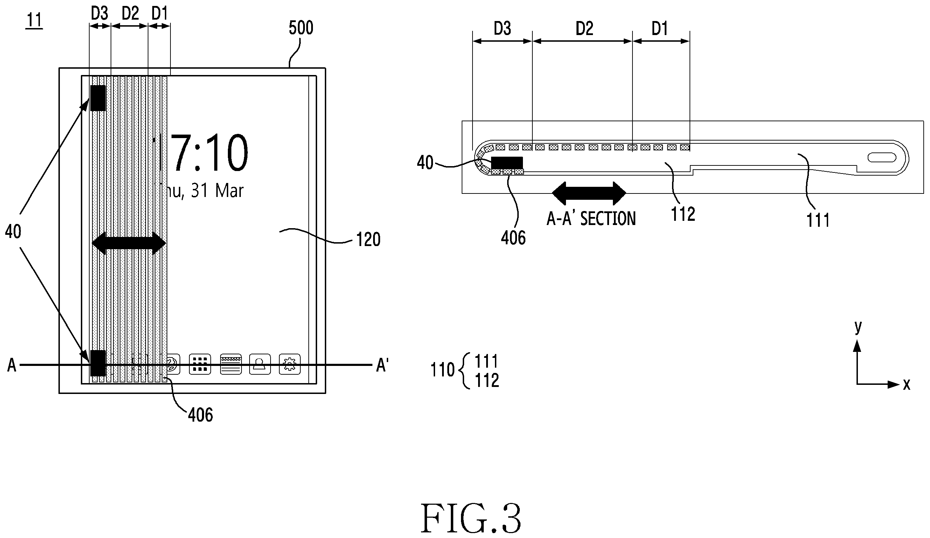

FIG. 3 illustrates a plan view of an electronic device including a magnetic member according to an embodiment and a cross-sectional view of the electronic device taken along a line A-A'.

Referring to FIG. 3, the electronic device 11 according to an embodiment may include at least one magnetic member 40. The at least one magnetic member 40 may be disposed inside the electronic device 11. For example, the at least one magnetic member 40 may be disposed inside the second housing 112. Referring to FIG. 3, the at least one magnetic member 40 may be disposed at an edge portion of the second housing 112.

According to an embodiment, the electronic device 11 may include a plurality of supporting blocks 404. For example, the plurality of supporting blocks 406 may be a plurality of metal bars successively connected to each other. The metal bars may include a material (e.g., iron) that is affected by magnetic force in a magnetic field. The plurality of supporting blocks 406 may be disposed inside the electronic device 11. For example, the plurality of supporting blocks 406 may be disposed inside the second housing 112.

According to an embodiment, the plurality of supporting blocks 406 may be mechanically connected to each other. For example, a hinge structure (not illustrated) may be disposed between each adjacent ones of the plurality of supporting blocks 406. One of the plurality of supporting blocks 406 may rotate within a predetermined angle with respect to supporting blocks disposed on opposite sides thereof.

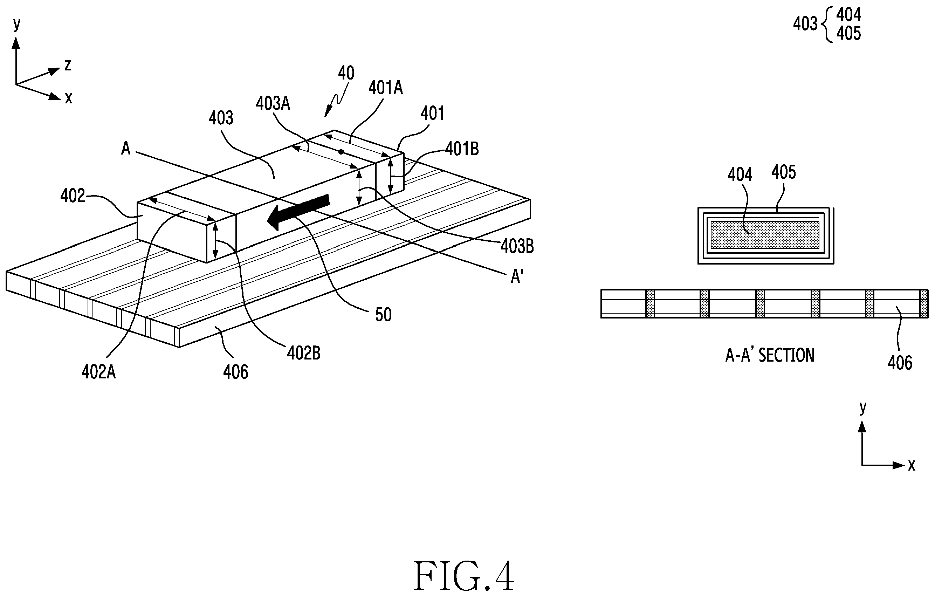

According to an embodiment, the plurality of supporting blocks 406 may be arranged side by side with each other. According to an embodiment, the plurality of supporting blocks 406 may be arranged in the longitudinal direction of the display 120. The plurality of supporting blocks 406 may be disposed such that the longitudinal direction thereof is substantially parallel to a direction in which the electromagnet is disposed (50 in FIG. 4).

According to an embodiment, the supporting blocks 406 may have a rectangular parallelepiped shape. However, the shape of the supporting blocks 406 is not limited thereto. For example, the supporting blocks 406 may be in the shape of a cylinder or an N-angle pillar.

According to an embodiment, the plurality of supporting blocks 406 may be disposed on the rear surface of the display 120. According to an embodiment, the plurality of supporting blocks 406 may support the display 120. According to an embodiment, the display 120 may include a flexible display 120 in which a plurality of foldable sections are arranged or all sections are bendable or foldable. The display 120 may be disposed along top surfaces of the plurality of supporting blocks 406. According to an embodiment, the display 120 may be foldable or unfoldable while moving along the plurality of supporting blocks 406.

According to an embodiment, the plurality of supporting blocks 406 may move by a sliding motion. According to an embodiment, when the display 120 is moved into or out of the housing 110 by the sliding motion, the plurality of supporting blocks 406 may move along the display 120. The at least one magnetic member 40 may be disposed close to a path along which the plurality of supporting blocks 406 move. The plurality of supporting blocks 406 close to the magnetic member 40 may move along the path by the sliding motion.

An attractive force may act between the at least one magnetic member 40 and at least one supporting block close to the magnetic member 40. The strength of the attractive force acting between the magnetic member 40 and the supporting block may vary depending on the strength of the magnetic force of the magnetic member 40. The strength of the attractive force acting between the magnetic member 40 and the supporting block may vary depending on the strength or the direction of the current flowing through the coil 405. For example, when at least one processor controls the strength or the direction of current flowing through the coil 405 such that a magnetic field is formed inside the core 404 in the first direction 50, the strength of the attractive force acting between the magnetic member 40 and the supporting block may be increased. When at least one processor controls the strength or the direction of current flowing through the coil 405 such that a magnetic field is formed inside the core 404 in a direction opposite to the first direction 50, the strength of the attractive force acting between the magnetic member 40 and the supporting block may be decreased. That is, the electromagnet included in the magnetic member 40 may carry out a function of adjusting the strength of the magnetic force formed outside the magnetic member 40 by the permanent magnet.

FIG. 4 illustrates a perspective view and a cross-sectional view of a magnetic force member and supporting blocks according to an embodiment.

Referring to FIG. 4, the magnetic member 40 may include at least one electromagnet 403 and at least one permanent magnet. For example, the electromagnet 403 may include a first permanent magnet 401, a core 404, and a coil 405. However, the configuration of the magnetic member 40 is not limited thereto. According to an embodiment, the electronic device may further include one or more other components. For example, the magnetic member 40 may further include a second permanent magnet 402.

According to an embodiment, the coil 405 may be arranged to induce a magnetic field inside the core 404. When current flows through the coil 405, a magnetic field may be induced along the core 404.

According to an embodiment, the core 404 may be disposed to face one surface of the first permanent magnet 401. For example, the core 404 may be formed extending from one surface of the first permanent magnet 401. The core 404 may extend from one surface of the first permanent magnet 401 in the first direction 50. The first permanent magnet 401 may be disposed at one end of the electromagnet 403. That is, the first permanent magnet 401 may face one end of the electromagnet 403.

According to an embodiment, the permanent magnet may have a rectangular parallelepiped shape. However, the shape of the permanent magnet is not limited thereto. For example, the permanent magnet may be in the shape of a cylinder or an N-angle pillar.

According to an embodiment, in order for the magnetic force formed by the permanent magnet to be dominant compared to the magnetic force formed by the electromagnet, the size of the permanent magnet may be greater than or equal to the size of the electromagnet. According to an embodiment, the size of the first permanent magnet 401 may be greater than or equal to the size of the electromagnet 403. For example, the width 401A of the first permanent magnet 401 may be greater than or equal to the width 403A of the electromagnet 403. The height 401B of the first permanent magnet 401 may be greater than or equal to the height 403B of the electromagnet 403. For example, the first permanent magnet 401 may be configured to have at least one of a width or a height greater than that of the core 404 of the electromagnet 403.

According to an embodiment, the magnetic member 40 may further include a second permanent magnet 402. The second permanent magnet 402 may extend from the core 404 in the first direction 50. The second permanent magnet 402 may be disposed in a direction opposite to the first permanent magnet 401 with respect to the core 404. The second permanent magnet 402 may be disposed at one end of the electromagnet 403. That is, the second permanent magnet 402 may face one end of the electromagnet 403. The electromagnet 403 may be disposed between the first permanent magnet 401 and the second permanent magnet 402. The core 404 may be disposed between the first permanent magnet 401 and the second permanent magnet 402.

According to an embodiment, the size of the second permanent magnet 402 may be greater than or equal to the size of the electromagnet 403. For example, the width 402A of the second permanent magnet 402 may be greater than or equal to the width 403A of the electromagnet 403. The height 402B of the second permanent magnet 402 may be greater than or equal to the height 403B of the electromagnet 403. For example, the second permanent magnet 402 may be configured to have at least one of a width or a height greater than that of the core of the electromagnet 403.

According to an embodiment, the first permanent magnet 401 and the second permanent magnet 402 may have the same shape. According to an embodiment, the first permanent magnet 401 and the second permanent magnet 402 may be provided to be symmetrical to each other about the core 404.

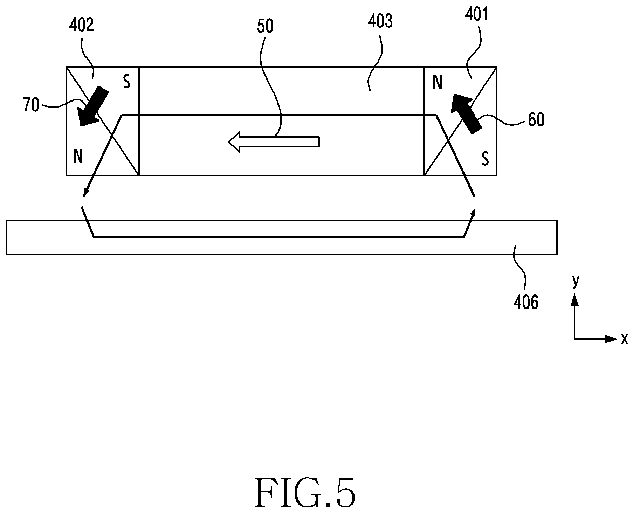

FIG. 5 is a cross-sectional view illustrating the magnetic force and magnetic field of a magnetic member according to an embodiment.

According to an embodiment, the core 404 may extend from the first permanent magnet 401 in the first direction 50. According to an embodiment, the first permanent magnet 401 may be disposed such that the magnetic force is directed in a second direction 60. The second direction may form an inclination angle with the first direction 50. For example, the second direction 60 may be a direction inclined from the first direction 50 in a direction opposite to a direction in which the supporting blocks 406 are arranged with respect to the first permanent magnet 401.

According to an embodiment, the second permanent magnet 402 may be disposed such that the magnetic force is directed in a third direction 70. The third direction 70 may form an inclination angle with the first direction 50. For example, the third direction 70 may be a direction inclined from the first direction 50 in a direction in which the supporting blocks 406 are arranged with respect to the second permanent magnet 402. According to an embodiment, the second direction 60 may be symmetrical to the second direction 60 with respect to the first direction 50 as an axis.

According to an embodiment, the magnetic member 40 may include a permanent magnet (e.g., the first permanent magnet 401 or the second permanent magnet 402), so that magnetic force can be formed even when current does not flow through the coil 405 (e.g., when a current value applied to the coil 405 is 0A). The magnetic member 40 may include a permanent magnet (e.g., the first permanent magnet 401 or the second permanent magnet 402), so that magnetic force can be formed to be directed in the first direction 50 even when current does not flow through the coil 405 (e.g., when a current value applied to the coil 405 is 0A). The strength of the magnetic force of the electromagnet may increase in proportion to the square of the strength of the current.

According to an embodiment, compared to the case of changing the amount of current applied to a magnetic member configured only with an electromagnet, a greater amount of change in the strength of magnetic force can be obtained with the same amount of change in current.

For example, it is assumed that the size of the permanent magnet (e.g., the first permanent magnet 401 and the second permanent magnet 402) is 5 * 2 * 2 (width * thickness * length) (mm), the size of the electromagnet 403 is 5 * 2 * 10 (mm), and the size of one supporting block is 4 * 1 * 10 (mm). In addition, it is assumed that, as the coil 405, a copper conducting wire having a diameter of 0.15 mm is used and designed to be wound 3 turns on the transverse section of the core 404 and 66 turns on the longitudinal section, and the total resistance of the conducting wire is about 2.5 Ω. In addition, it is assumed that the maximum power usable by the electronic device is 10W and the amount of current usable by the electromagnet 403 is about 2A. Basic magnetic force may refer to magnetic force in a case in which current does not flow through the coil 405. That is, the basic magnetic force may mean the strength of magnetic force formed by at least one permanent magnet. However, the numerical values in this paragraph are for explaining an example of the strength of the following magnetic force, but are not limited thereto.

**[Table 1]**

| Current (A) | -2A | -1A | 0A | 1A | 2A |
|---|---|---|---|---|---|
| Magnetic force of magnetic member 40 when including permanent magnet (N) | 1N | 1.18N | 1.49N | 1.82N | 2.04N |
| Magnetic force of magnetic member when not including permanent magnet (N) | - | - | 0N | 0.059N | 0.23N |

Referring to Table 1, when the magnetic member 40 according to an embodiment includes the first permanent magnet 401 and the second permanent magnet 402, the basic magnetic force of the magnetic member 40 may be 1.49N. In this case, the amount of change in magnetic force that may be obtained by the magnetic member 40 with current of +1A may be 0.33N. The amount of change in the magnetic force that may be obtained by the magnetic member 40 with current of -1A may be -0.31N. Therefore, the amount of change in magnetic force of 0.64N may be obtained by using current of ±1A (2.5W). Referring to Table 1, when the magnetic member 40 according to an embodiment does not include a permanent magnet, the basic magnetic force of the magnetic member may be 0N. With a structure obtained in this case, even if current is applied in the opposite direction ((-) direction), it may not be possible to obtain the force pushing the supporting members and it may be possible to obtain attractive force as in the case of applying the current in the forward direction ((+) direction). Therefore, the amount of change in magnetic force of 0.059N may be obtained by using current of ±1A (2.5W). As a result, by including a permanent magnet, it may be possible to obtain an amount of charge in magnetic force about 10 times greater than that in the case where the permanent magnet is not included. According to an embodiment, the first permanent magnet 401 may be disposed such that the magnetic force of the first permanent magnet 401 is directed in the second direction 60. The amount of change in the magnetic force of the magnetic member 40 by the current of the magnetic member 40 may vary depending on the angle of the second direction 60 with respect to the z-axis direction. As illustrated in Table 2 below, the amount of change in the magnetic force of the magnetic member 40 may vary depending on the inclination angle. Basic magnetic force may refer to magnetic force in a case in which current does not flow through the coil 405. That is, the basic magnetic force may mean the strength of magnetic force formed by at least one permanent magnet. It is assumed that the strength of current is 2A.

**[Table 2]**

| Inclination angle | 135 Deg. | 120 Deg. | 105 Deg. | 90 Deg. | 75 Deg. | 60 Deg. | 45 Deg. |
|---|---|---|---|---|---|---|---|
| -2A attenuated magnetic force | -0.36N | -0.48N | -0.48N | -0.43N | -0.33N | -0.24N | -0.09N |
| Basic magnetic force | 1.52N | 1.58N | 1.49N | 1.2N | 0.86N | 0.67N | 0.44N |
| 2A added magnetic force | 0.26N | 0.42N | 0.55N | 0.75N | 0.81N | 0.74N | 0.54N |
| -2A attenuated % | -24% | -30% | -32% | -36% | -38% | -36% | -20% |
| 2A added % | 17% | 27% | 37% | 63% | 94% | 110% | 123% |
| Added % + Attenuated % | 41% | 57% | 69% | 98% | 133% | 146% | 143% |

**Referring** to Table 2, for example, comparing the case where the angle of the second direction 60 with respect to the z-axis direction is 60 degrees and the case where the angle is 105 degrees, the strength of the basic magnetic force (0.67N) in the case of 60 degrees is smaller than the strength of the magnetic force in the case of 105 degrees (1.49N), but in the case of 60 degrees, it is possible to obtain a greater amount of change in the strength of the magnetic force (added % + attenuated %). According to an embodiment, the angle of the second direction 60 with respect to the z-axis direction may be 115 degrees. However, the angle of the second direction 60 with respect to the z-axis direction may be adjusted depending on circumstances as illustrated in Table 2 above. According to an embodiment, attractive force may act between the at least one magnetic member 40 and at least one supporting block close to the magnetic member 40. The strength of the attractive force acting between the magnetic member 40 and the supporting block varies depending on the strength of the magnetic force of the magnetic member 40. Since the strength of the magnetic force formed by the magnetic member 40 changes depending on the strength or the direction of the current flowing through the coil 405, the strength of the attractive force acting between the magnetic member 40 and the supporting block may vary. When the at least one processor controls the strength or the direction of current flowing through the coil 405 such that a magnetic field is formed in the first direction 50 inside the core 404, the strength of attractive force acting between the magnetic member 40 and the supporting block may be increased. According to an embodiment, when at least one processor controls the strength or the direction of current flowing through the coil 405 such that a magnetic field is formed inside the core 404 in a direction opposite to the first direction 50, the strength of the attractive force acting between the magnetic member 40 and the supporting block may be decreased.

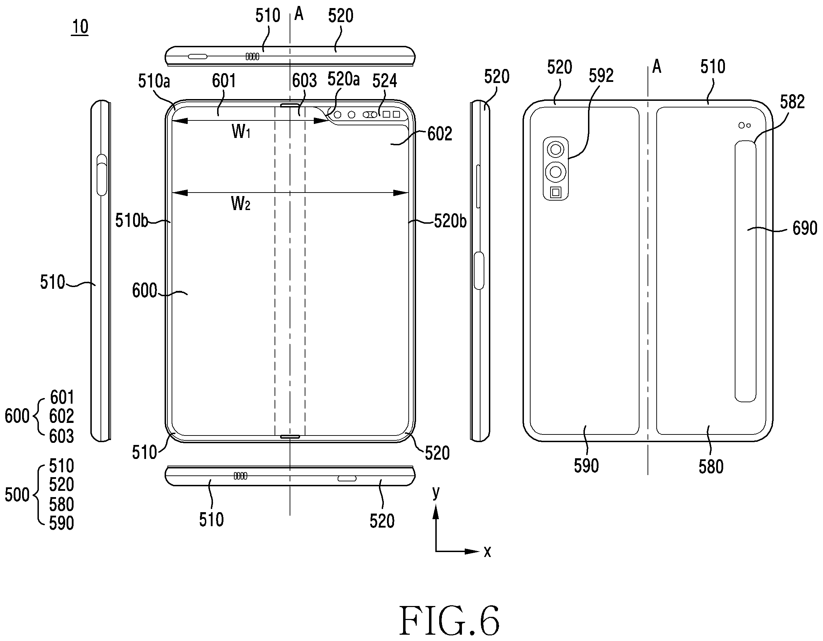

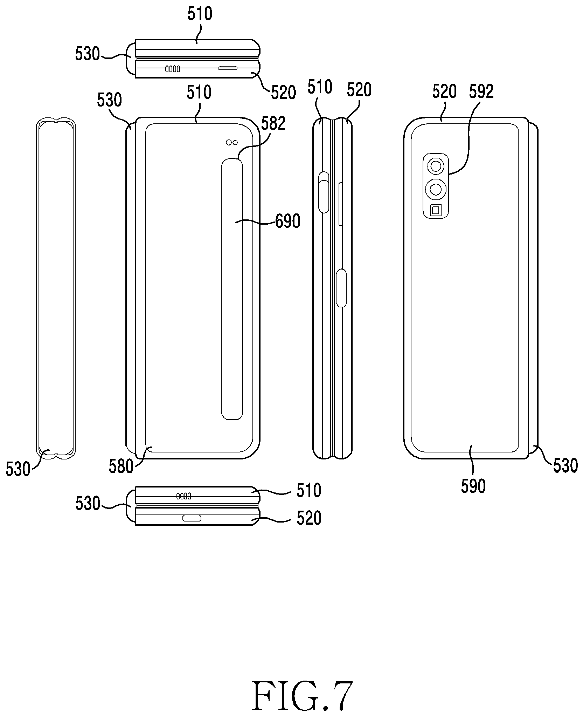

Referring to FIGS. 6 and 7, in an embodiment, an electronic device 10 may include a foldable housing 500, a hinge cover 530 configured to cover the foldable portion of the foldable housing, and a flexible or foldable display 600 (hereinafter, simply referred to as a "display" 700) disposed in a space defined by the foldable housing 500. Herein, the surface on which the display 600 is disposed is defined as a first surface or the front surface of the electronic device 10. The surface opposite to the front surface is defined as a second surface or the rear surface of the electronic device 10. In addition, a surface surrounding the space between the front and rear surfaces is defined as a third surface or the side surface of the electronic device 10.

In an embodiment, the foldable housing 500 may include a first housing structure 510, a second housing structure 520 including a sensor area 524, a first rear surface cover 580, and a second rear surface cover 590. The foldable housing 500 of the electronic device 10 is not limited to the shape and assembly illustrated in FIGS. 6 and 7, but may be implemented by combinations and/or assemblies of other shapes or components. For example, in another embodiment, the first housing structure 510 and the first rear surface cover 580 may be integrated with each other, and the second housing structure 520 and the second rear surface cover 590 may be integrated with each other.

In the illustrated embodiment, the first housing structure 510 and the second housing structure 520 may be disposed on opposite sides about a folding axis (axis A), and may have generally symmetrical shapes about the folding axis A. As will be described later, the first housing structure 510 and the second housing structure 520 may have different angles or distances therebetween depending on whether the electronic device 10 is in the unfolded state, in the folded state, or in the intermediate state. In the illustrated state, unlike the first housing structure 510, the second housing structure 520 may further include the sensor area 524 in which various sensors are disposed, but the first housing structure and the second housing structure may have mutually symmetrical shapes in other areas.

In an embodiment, as illustrated in FIG. 6, the first housing structure 510 and the second housing structure 520 may define together a recess that accommodates the display 600 therein. In the illustrated embodiment, due to the sensor area 524, the recess may have two or more different widths in a direction perpendicular to the folding axis A.

For example, the recess may have (1) a first width w₁ between a first portion 510a of the first housing structure 510 that is parallel to the folding axis A and a first portion 520a of the second housing structure 520 that is disposed at an edge of the sensor area 524, and (2) a second width w₂ between a second portion 510b of the first housing structure 510 and a second portion 520b of the second housing structure 520 that is parallel to the folding axis A but does not correspond to the sensor area 524. In this case, the second width W₂ may be greater than the first width W₁. In other words, the first portion 510a of the first housing structure 510 and the first portion 520a of the second housing structure 520, which are asymmetrical to each other, may define the first width w₁ of the recess, and the second portion 510b of the first housing structure 510 and the second portion 520b of the second housing structure 520, which are symmetrical to each other, may define the second width w₂ of the recess. In an embodiment, the first portion 520a and the second portion 520b of the second housing structure 520 may have different distances from the folding axis A. The width of the recess is not limited to the illustrated example. In various embodiments, the recess may have multiple widths due to the shape of the sensor area 524 or the asymmetrical portions of the first housing structure 510 and the second housing structure 520.

In an embodiment, the first housing structure 510 and the second housing structure 520 may be at least partially made of a metal material or a non-metal material having a rigidity of a level selected in order to support the display 600.

In an embodiment, the sensor area 524 may have a predetermined area adjacent to one corner of the second housing structure 520. However, the arrangement, shape, and size of the sensor area 524 are not limited to the illustrated example. For example, in another embodiment, the sensor area 524 may be provided at another corner of the second housing structure 520 or in any area between the upper and lower end corners. In an embodiment, components embedded in the electronic device 10 to carry out various functions may be exposed on the front surface of the electronic device 10 through the sensor area 524 or through one or more openings provided in the sensor area 524. In various embodiments, the components may include various types of sensors. The sensors may include, for example, at least one of a front camera, a receiver, or a proximity sensor.

The first rear surface cover 580 may be disposed on one side of the folding axis on the rear surface of the electronic device, and may have, for example, a substantially rectangular periphery, which may be enclosed by the first housing structure 510. Similarly, the second rear surface cover 590 may be disposed on the other side of the folding axis in the rear surface of the electronic device, and the periphery thereof may be enclosed by the second housing structure 520.

In the illustrated embodiment, the first rear surface cover 580 and the second rear surface cover 590 may have substantially symmetrical shapes about the folding axis (axis A). However, the first rear surface cover 580 and the second rear surface cover 590 do not necessarily have mutually symmetrical shapes, and in another embodiment, the electronic device 10 may include a first rear surface cover 580 and a second rear surface cover 590 having various shapes. In still another embodiment, the first rear surface cover 580 may be integrated with the first housing structure 510, and the second rear surface cover 590 may be integrated with the second housing structure 520.

In an embodiment, the first rear surface cover 580, the second rear surface cover 590, the first housing structure 510, and the second housing structure 520 may define a space in which various components (e.g., a printed circuit board or a battery) of the electronic device 10 may be disposed. In an embodiment, one or more components may be disposed or visually exposed on the rear surface of the electronic device 10. For example, at least a portion of the sub-display 690 may be visually exposed through a first rear surface area 582 of the first rear surface cover 580. In another embodiment, one or more components or sensors may be visually exposed through a second rear surface area 592 of the second rear surface cover 590. In various embodiments, the sensors may include a proximity sensor and/or a rear camera.

Referring to FIG. 7, the hinge cover 530 may be disposed between the first housing structure 510 and the second housing structure 520 and may be configured to cover internal components (e.g., the hinge structure). In an embodiment, the hinge cover 530 may be covered by a portion of the first housing structure 510 and a portion of the second housing structure 520, or may be exposed to the outside depending on whether the electronic device 10 is in the unfolded state (flat state) or in the folded state.

For example, as illustrated in FIG. 6, when the electronic device 10 is in the unfolded state, the hinge cover 530 may not be exposed by being covered by the first housing structure 510 and the second housing structure 520. As an example, as illustrated in FIG. 7, when the electronic device 10 is in the folded state (e.g., the fully folded state), the hinge cover 530 may be exposed to the outside between the first housing structure 510 and the second housing structure 520. For example, when the first housing structure 510 and the second housing structure 520 are folded with a certain angle (intermediate state), the hinge cover 530 may be partially exposed to the outside between the first housing structure 510 and the second housing structure 520. However, in this case, the exposed area may be smaller than that in the fully folded state. In an embodiment, the hinge cover 530 may include a curved surface.

The display 600 may be disposed in a space defined by the foldable housing 500. For example, the display 600 may be seated in the recess defined by the foldable housing 500, and may constitute most of the front surface of the electronic device 10.

Accordingly, the front surface of the electronic device 10 may include the display 600, and a portion of the first housing structure 510 and a portion of the second housing structure 520, which are adjacent to the display 600. In addition, the rear surface of the electronic device 10 may include the first rear surface cover 580, a partial area of the first housing structure 510 adjacent to the first rear surface cover 580, the second rear surface cover 590, and a partial area of the second housing structure 520 adjacent to the second rear surface cover 590.

The display 600 may be a display in which at least a partial area is transformable into a planar surface or a curved surface. In an embodiment, the display 600 may include a folding area 603, a first area 601 disposed on one side of the folding area 603 (e.g., the left side of the folding area 603 illustrated in FIG. 6), and a second area 602 disposed on the other side of the folding area 603 (e.g., the right side of the folding area 603 illustrated in FIG. 6).

The area division of the display 600 illustrated in FIG. 6 is illustrative, and the display 600 may be divided into multiple areas (e.g., four or more areas or two areas) depending on the structures or functions thereof. For example, in the embodiment illustrated in FIG. 6, the areas of the display 600 may be divided by the folding area 603 or the folding axis (the axis A) extending parallel to the y axis. However, in another embodiment, the areas of the display 600 may be divided based on another folding area (e.g., a folding area parallel to the x axis) or another folding axis (e.g., a folding axis parallel to the x axis).

The first area 601 and the second area 602 may have generally symmetrical shapes about the folding area 603. However, unlike the first area 601, the second area 602 may include a notch cut due to the presence of the sensor area 524, but may have a shape symmetrical to the first area 601 in areas other than the sensor area. In other words, the first area 601 and the second area 602 may include portions having mutually symmetrical shapes and portions having mutually asymmetrical shapes.

Hereinafter, the operation of the first housing structure 510 and the second housing structure 520 and each area of the display 600 according to the states of the electronic device 10 (e.g., the unfolded state (flat state) and the folded state) will be described.

According to an embodiment, when the electronic device 10 is in the unfolded state (flat state) (e.g., FIG. 6), the first housing structure 510 and the second housing structure 520 may be disposed to form an angle of 180 degrees therebetween and to face the same direction. The surface of the first area 601 and the surface of the second area 602 of the display 600 form 180 degrees from each other and may face the same direction (e.g., the front direction of the electronic device). The folding area 603 may form the same plane as the first area 601 and the second area 602.

In an embodiment, when the electronic device 10 is in the folded state (e.g., FIG. 7), the first housing structure 510 and the second housing structure 520 may be disposed to face each other. The surface of the first area 601 and the surface of the second area 602 of the display 600 form a narrow angle (e.g., between 0 degrees and 10 degrees) and may face each other. At least a portion of the folding area 603 may form a curved surface having a predetermined curvature.

According to an embodiment, when the electronic device 10 is in the intermediate state (folded state) (e.g., FIG. 7), the first housing structure 510 and the second housing structure 520 may be disposed to form a predetermined angle relative to each other. The surface of the first area 601 and the surface of the second area 602 of the display 600 may form an angle greater than that in the folded state and smaller than that in the unfolded state. At least a portion of the folding area 603 may form a curved surface having a predetermined curvature, and the curvature in this case may be smaller than that in the folded state.

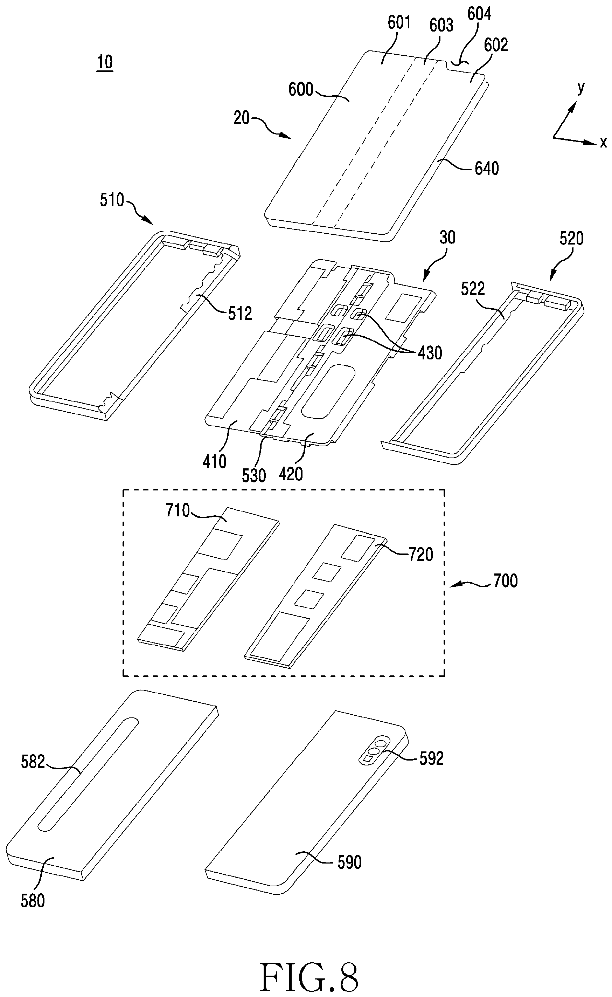

FIG. 8 is an exploded perspective view of the electronic device according to an embodiment.

Referring to FIG. 8, in an embodiment, the electronic device 10 may include at least one of a display unit 20, a bracket assembly 30, a board unit 700, a first housing structure 510, a second housing structure 520, a first rear surface cover 580, and a second rear surface cover 590. Herein, the display unit 20 may be referred to as a display module or a display assembly.

The display unit 20 may include a display 600 and at least one plate or layer 640 on which the display 600 is seated. In an embodiment, the plate 640 may be disposed between the display 600 and the bracket assembly 30. The display 600 may be disposed on at least a portion of one surface (e.g., the top surface with reference to FIG. 8) of the plate 640. The plate 640 may have a shape corresponding to that of the display panel 600. For example, a partial area of the plate 640 may have a shape corresponding to the notch 604 in the display 600.

The bracket assembly 30 may include a first bracket 410, a second bracket 420, a hinge structure disposed between the first bracket 410 and the second bracket 420, a hinge cover 530 configured to cover the hinge structure when the hinge structure is viewed from the outside, and a wiring member 430 (e.g., a flexible printed circuit board (FPCB)) extending across the first and second brackets 410 and 420.

In an embodiment, the bracket assembly 30 may be disposed between the plate 640 and the board unit 700. For example, the first bracket 410 may be disposed between the first area 601 of the display 600 and a first board 710. The second bracket 420 may be disposed between the second area 602 of the display 600 and a second board 720.

In an embodiment, at least a portion of the wiring member 430 and at least a portion of the hinge structure 300 may be disposed inside the bracket assembly 30. The wiring member 430 may be disposed in a direction across the first bracket 410 and the second bracket 420 (e.g., the x-axis direction). The wiring member 430 may be disposed in a direction (e.g., the x-axis direction) perpendicular to the folding axis (e.g., the y axis or the folding axis A in FIG. 6) of the folding area 603.

As described above, the board unit 700 may include the first board 710 disposed on the first bracket 410 side and the second board 720 disposed on the second bracket 420 side. The first board 710 and the second board 720 may be disposed in a space defined by the bracket assembly 30, the first housing structure 510, the second housing structure 520, the first rear cover 580, and the rear cover 590. Components for implementing various functions of the electronic device 10 may be mounted on the first board 710 and the second board 720.

The first housing structure 510 and the second housing structure 520 may be assembled to be coupled to the opposite sides of the bracket assembly 30 in the state in which the display unit 20 is coupled to the bracket assembly 30. As will be described later, the first housing structure 510 and the second housing structure 520 may be coupled to the bracket assembly 30 by sliding on the opposite sides of the bracket assembly 30.

In an embodiment, the first housing structure 510 may include a first rotation support surface 512, and the second housing structure 520 may include a second rotation support surface 522, which corresponds to the first rotation support surface 512. The first rotation support surface 512 and the second rotation support surface 522 may include curved surfaces corresponding, respectively, to curved surfaces included in the hinge cover 530.

In an embodiment, when the electronic device 10 is in the unfolded state (e.g., the electronic device in FIG. 6), the first rotation support surface 512 and the second rotation support surface 522 may cover the hinge cover 530, so the hinge cover 530 may not be exposed or may be only minimally exposed to the rear surface of the electronic device 10. On the other hand, when the electronic device 10 is in the folded state (e.g., the electronic device in FIG. 7), the first rotation support surface 512 and the second rotation support surface 522 may rotate along the curved surface included in the hinge cover 530, so the hinge cover 530 may be maximally exposed to the rear surface of the electronic device 10.

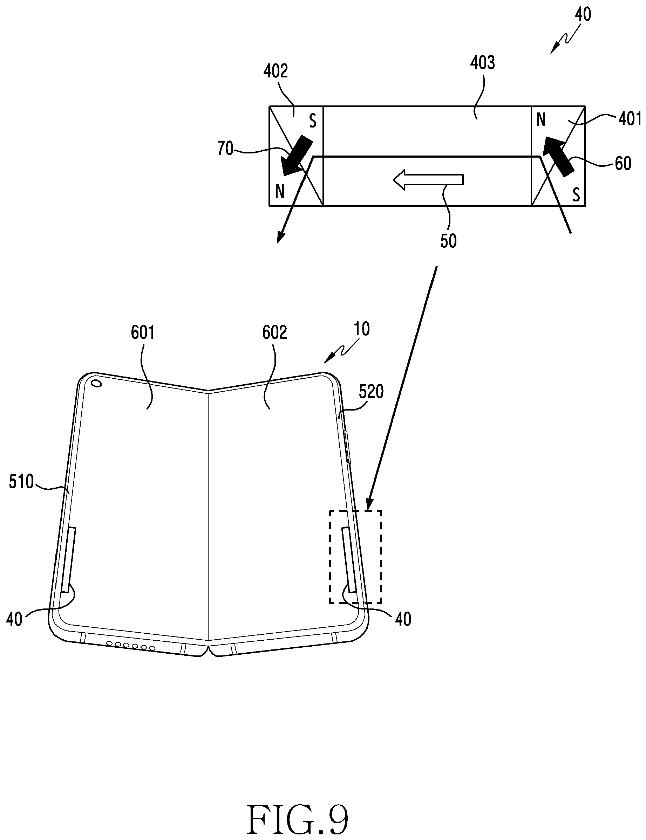

FIG. 9 is a perspective view illustrating an electronic device including a magnetic member according to an embodiment.

The descriptions made with reference to FIG. 6 to 8 may be applicable to the configuration of the electronic device 10. The descriptions made with reference to FIG. 4 and 5 may be applicable to the configuration of the magnetic member 40. The same reference numerals are used for the same or substantially the same components as those described above, and a redundant description will be omitted.

Referring to FIG. 9, an electronic device 10 according to an embodiment may include a magnetic member 40 disposed inside a housing structure 510 or 520. At least one magnetic member 40 may be disposed in an inner space provided by at least one of the first housing structure 510 and the second housing structure 520.

According to an embodiment, the magnetic member 40 may include an electromagnet 403 and at least one permanent magnet. The magnetic member 40 may include a first permanent magnet 401. The magnetic member 40 may further include a second permanent magnet 402. The at least one permanent magnet may face one end of the electromagnet 403.

According to an embodiment, the first permanent magnet 401 may be disposed at one end of the electromagnet 403, and the second permanent magnet 402 may be disposed at the other end of the electromagnet 403. The electromagnet 403 may be disposed between the first permanent magnet 401 and the second permanent magnet 402. According to another embodiment, either the first permanent magnet 401 or the second permanent magnet 402 may be omitted.

According to an embodiment, the electronic device 10 may control the current supplied to the electromagnet 403 such that the magnetic force of the electromagnet 403 is strengthened in a state in which the first housing structure 510 and the second housing structure 520 are folded. In response to detecting that the first housing and the second housing are unfolded, the electronic device 10 may control the current supplied to the electromagnet 403 to cancel the magnetic force of the permanent magnet. For example, the electronic device 10 may control a current supplier (not illustrated) configured to supply current to the electromagnet 403 such that the direction of the current supplied to the electromagnet 403 is changed based on the states of the first housing structure 510 and the second housing structure 520.

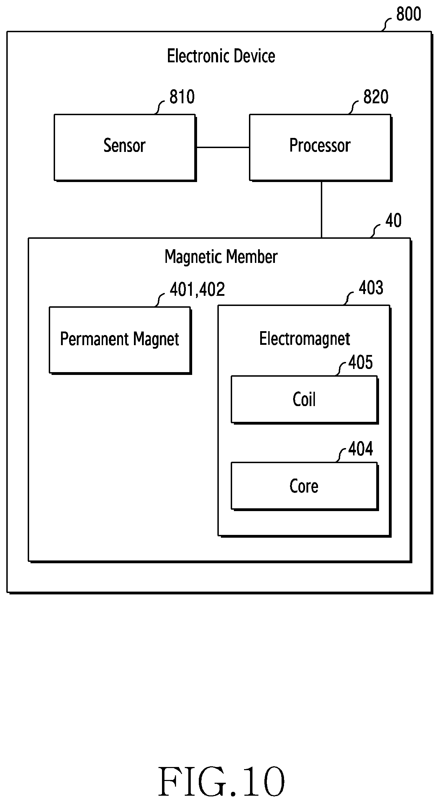

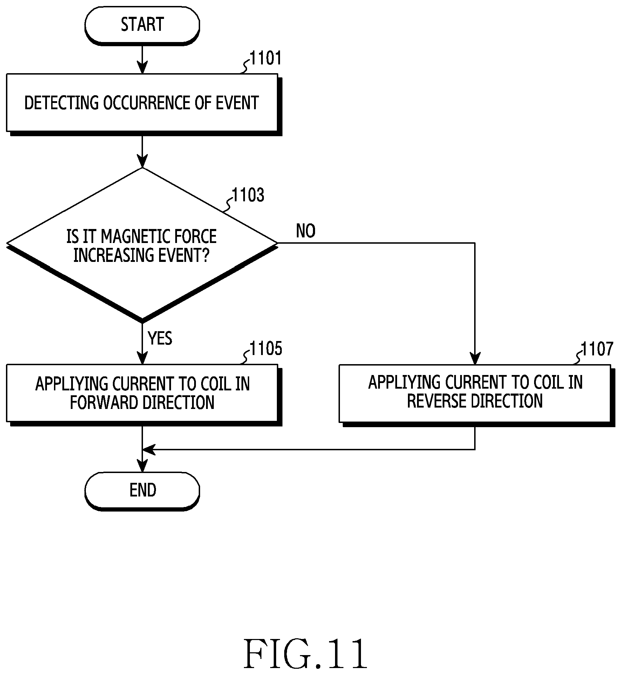

FIG. 10 is a block diagram illustrating an exemplary configuration of an electronic device according to an embodiment. FIG. 11 is a flowchart illustrating a method of adjusting the strength of magnetic force of a magnetic member according to an embodiment.

The descriptions made with reference to FIG. 4 and 5 may be applicable to the configuration of the magnetic member 40. The same reference numerals are used for the same or substantially the same components as those described above, and a redundant description will be omitted. The electronic device 800 may include the electronic device 11 of FIGS. 1 to 3 and the electronic device 10 of FIGS. 6 to 9. Basic magnetic force may refer to magnetic force in a case in which current does not flow through the coil 405. That is, the basic magnetic force may mean the strength of magnetic force formed by at least one permanent magnet.

Referring to FIG. 10, an electronic device 800 may include a sensor module 810 and a processor 820 electrically connected to the sensor module 810. The processor 820 may control the strength of the magnetic force of the magnetic member 40. For example, the processor 820 may control the strength of the magnetic force of the magnetic member 40 by controlling at least one of the strength or the direction of the current flowing through the coil 405. The processor 820 controls at least one of the strength or the direction of the current flowing through the coil 405 such that a magnetic field is induced in the first direction 50 inside the core 404 or in a direction opposite to the first direction 50.

Referring to FIGS. 10 and 11, the processor 820 according to an embodiment may be configured to perform an operation of identifying occurrence of an event by using the at least one sensor module 810 (1101). The processor 820 electrically connected to the sensor module 810 may adjust the strength of the magnetic force of the magnetic member 40 in response to the occurrence of an event. For example, the processor 820 may adjust the strength of the magnetic force by controlling at least one of the strength or the direction of the current flowing through the coil 405.

The processor 820 according to an embodiment may perform an operation of determining whether the identified event is a magnetic force increasing event for increasing the magnetic force of the magnetic member 40 (1103).

When the identified event is determined to be a magnetic force increasing event, the processor 820 may carry out an operation of controlling a power management circuit (not illustrated) that supplies power to the coil of the magnetic member such that current is applied to the coil of the magnetic member in the forward direction (1105). The magnetic force increasing event may mean that, for example, a state in which the slidable electronic device illustrated in FIGS. 1 and 2 is in the maximally expanded state or the maximally contracted state is detected. As another example, the processor 820 may determine that the magnetic force increasing event has occurred when it is detected that the relative positions of the housings of the slidable electronic device illustrated in FIGS. 1 and 2 are within a predetermined range. As another example, the magnetic force increasing event may mean that the housing of the foldable electronic device illustrated in FIGS. 6 to 8 is detected as being in the folded state.

When it is determined that the identified event is not a magnetic force increasing event (or determined as a magnetic force decreasing event), the processor 820 may carry out an operation of controlling the power management circuit (not illustrated) to supply power to the coil such that current is applied to the coil of the magnetic member in the reverse direction

(1107). The magnetic force decreasing event may mean, for example, that it is detected that the slidable electronic device illustrated in FIGS. 1 and 2 is in an intermediate state between the maximally expanded state and a maximally contracted state. As another example, the magnetic force decreasing event may mean that the housing of the foldable electronic device illustrated in FIGS. 6 to 8 is detected as being in the unfolded state.

According to an embodiment, the processor 820 may apply current to the coil 405 in the forward or reverse direction in response to detecting, by the sensor module 810, the magnetic force increasing event. For example, when current is applied to the coil 405 in the forward direction, a magnetic field may be formed in the electromagnet 403 in a first direction (50 in FIG. 5). In this case, the magnetic force of the electromagnet 403 may be strengthened in addition to the basic magnetic force, so that the strength of the magnetic force of the magnetic member 40 can be increased. When current is applied to the coil 405 in the reverse direction, the electromagnet 403 may generate a magnetic field in a direction opposite to the first direction (50 in FIG. 5). In this case, the magnetic force of the electromagnet 403 may be offset from the basic magnetic force, so that the strength of the magnetic force of the magnetic member 40 can be decreased.

According to an embodiment, the sensor module 810 may include a first sensor configured to measure the range of the second housing structure 520 relative to the first housing structure 510, a second sensor configured to detect the folding of the electronic device 10, a third sensor configured to detect the unfolding of the electronic device 10, a fourth sensor configured to detect holding of the electronic device 10, and a temperature sensor. However, the sensor module 810 is not limited thereto. For example, at least one of the above-described components may be omitted from the sensor module 810 or the sensor module 810 may further include at least one sensor.

According to an embodiment, the electronic device 800 may further include at least one processor electrically connected to the second sensor. In response to determining, by the second sensor, that the electronic device 800 is in the folded state, the at least one processor may control at least one of the strength or the direction of the current flowing through the coil 405. For example, in response to determining, by the second sensor, that the electronic device 800 is in the folded state, the at least one processor may control at least one of the strength or the direction of the current flowing through the coil 405 such that a magnetic field is induced in the first direction 50 inside the core 404. When the at least one processor controls the strength or the direction of the current flowing through the coil 405 such that a magnetic field is induced in the first direction inside the core 404, the direction of the magnetic force formed by the current and the direction of the basic magnetic force formed by the permanent magnet may be the same. In this case, the magnetic force of the electromagnet is strengthened in addition to the basic magnetic force so that the magnetic force of the magnetic member 40 can be increased. According to an embodiment, the electronic device 800 may include the electronic device 10 of FIG. 6.

According to an embodiment, the electronic device 800 may further include at least one processor electrically connected to the third sensor. In response to detecting, by the third sensor, the unfolding of the electronic device 800, the at least one processor may control at least one of the strength or the direction of the current flowing through the coil 405. For example, in response to detecting, by the third sensor, the unfolding of the electronic device 800, the at least one processor may control at least one of the strength or the direction of the current flowing through the coil 405 such that a magnetic field is induced in a direction opposite to the first direction 50 inside the core 404. When the at least one processor controls the strength or the direction of the current flowing through the coil 405 such that a magnetic field is induced in a direction opposite to the first direction inside the core 404, the direction of the magnetic force formed by the current and the direction of the basic magnetic force formed by the permanent magnet may become different from each other. According to an embodiment, the direction of magnetic force formed by the current may be opposite to the direction of basic magnetic force formed by the permanent magnet. In this case, since the magnetic force of the electromagnet is offset from the basic magnetic force, the magnetic force of the magnetic member 40 may be decreased. According to an embodiment, the electronic device 800 may include the electronic device 10 of FIG. 6.

According to an embodiment, when a user intends to use the electronic device 800 in the open state, strong force may be required to open the electronic device 800 when the strength of the magnetic force of the magnetic member 40 is strong. Accordingly, usability of the electronic device 10 may be deteriorated. To prevent this, the electronic device 800 according to an embodiment may further include at least one processor electrically connected to the fourth sensor. In response to detecting, by the fourth sensor, a user's holding of the electronic device 800, the at least one processor may control at least one of the strength or the direction of the current flowing through the coil 405. For example, in response to detecting, by the fourth sensor, the user's holding of the electronic device 10, the at least one processor may control at least one of the strength or the direction of the current flowing through the coil 405 such that a magnetic field is induced in a direction opposite to the first direction 50 inside the core 404. When the at least one processor controls the strength or the direction of the current flowing through the coil 405 such that a magnetic field is induced in a direction opposite to the first direction inside the core 404, the direction of the magnetic force formed by the current and the direction of the basic magnetic force formed by the permanent magnet may become different from each other. According to an embodiment, the direction of magnetic force formed by the current may be opposite to the direction of basic magnetic force formed by the permanent magnet. In this case, since the magnetic force of the electromagnet is offset from the basic magnetic force, the magnetic force of the magnetic member 40 may be decreased. According to an embodiment, the electronic device 800 may include the electronic device 10 of FIG. 6.

According to an embodiment, the electronic device 800 may further include at least one processor electrically connected to the at least one temperature sensor. The temperature sensor may measure the temperature outside the electronic device.

According to an embodiment, the repulsive force between displays may increase in a low-temperature situation. In preparation for the increase in the repulsive force, the at least one processor may control at least one of the strength or the direction of the current flowing through the coil 405 based on temperature data obtained from the temperature sensor. For example, the at least one processor may determine whether the value of the temperature data is equal to or less than a configured value. In response to determining that the value of the temperature data is equal to or less than a configured value, the at least one processor may control at least one of the strength or the direction of the current flowing through the coil 405 such that that a magnetic field is induced in the first direction 50 inside the core 404. When the at least one processor controls the strength or the direction of the current flowing through the coil 405 such that a magnetic field is induced in the first direction inside the core 404, the direction of the magnetic force formed by the current and the direction of the basic magnetic force formed by the permanent magnet may be the same. In this case, the magnetic force of the electromagnet may be added to the basic magnetic force, the magnetic force of the magnetic member 40 may be increased.

According to an embodiment, the electronic device 800 may include a touch screen. The touch screen may detect a touch input. For example, the touch screen may detect a touch input by a touch pen. When the touch pen is used, the strong magnetic force of the magnetic member 40 included in the electronic device 800 may affect the digitizer of the touch pen. In this case, the performance of the touch pen may deteriorate. In order to prevent this, at least one processor may adjust the strength of the magnetic force of the magnetic member 40 in response to detecting the touch input. For example, the electronic device may further include at least one processor electrically connected to the touch screen. When the touch screen detects a touch input, the at least one processor may control at least one of the strength or the direction of the current flowing through the coil 405. For example, when the touch screen detects a touch input, the at least one process may control at least one of the strength or the direction of the current flowing through the coil 405 such that a magnetic field is induced in a direction opposite to the first direction 50 inside the core 404. When the at least one processor controls the strength or the direction of the current flowing through the coil 405 such that a magnetic field is induced in a direction opposite to the first direction inside the core 404, the direction of the magnetic force formed by the current and the direction of the basic magnetic force formed by at least one permanent magnet may become different from each other. According to an embodiment, the direction of magnetic force formed by the current may be opposite to the direction of basic magnetic force formed by the permanent magnet. In this case, since the magnetic force of the electromagnet is offset from the basic magnetic force, the magnetic force of the magnetic member 40 may be decreased. Accordingly, the performance of the touch pen may be prevented from being deteriorated due to the strong magnetic force of the magnetic member 40 included in the electronic device 800.

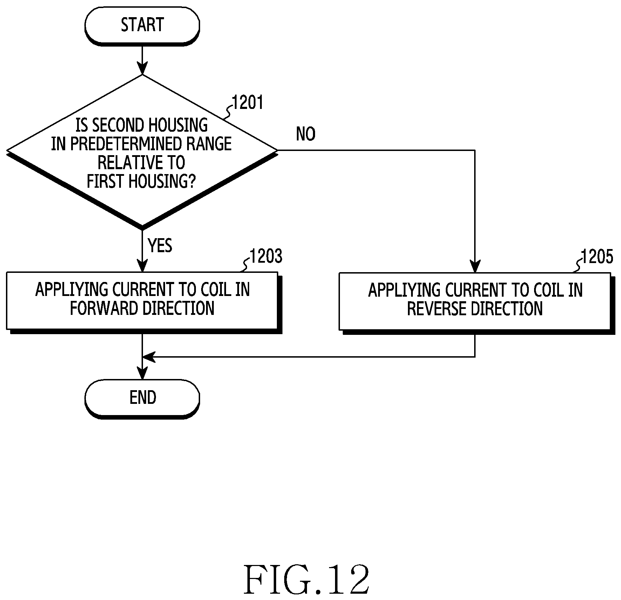

FIG. 12 is a flowchart illustrating a method of adjusting the strength of magnetic force of a magnetic member depending on the position of a housing according to an embodiment.

The descriptions made with reference to FIG. 4 and 5 may be applicable to the configuration of the magnetic member 40. The same reference numerals are used for the same or substantially the same components as those described above, and a redundant description will be omitted. Basic magnetic force may refer to magnetic force in a case in which current does not flow through the coil 405. That is, the basic magnetic force may mean the strength of magnetic force formed by at least one permanent magnet.

According to an embodiment, the electronic device 11 may further include at least one processor electrically connected to the first sensor. Referring to FIG. 12, the processor according to an embodiment may be configured to carry out an operation of identifying whether the second housing is within a predetermined range relative to the first housing by using the first sensor (1201). When it is determined that the second housing is within the predetermined range relative to the first housing, the processor may carry out an operation of controlling a power management circuit (not illustrated) to supply power to the coil such that current is applied to the coil of the magnetic member in a forward direction (1203). When it is determined that the second housing is out of the predetermined range relative to the first housing, the processor may carry out an operation of controlling a power management circuit (not illustrated) to supply power to the coil such that current is applied to the coil of the magnetic member in a reverse direction (1205).

According to an embodiment, in response to determining that the second housing (112 in FIG. 3) is within the predetermined range relative to the first housing (111 in FIG. 3), the at least one processor may control at least one of the strength or the direction of the current flowing through the coil 405. For example, current may be applied to the coil 405 in the forward or reverse direction.

According to an embodiment, in response to determining that the second housing (112 in FIG. 3) is within the predetermined range relative to the first housing (111 in FIG. 3), the at least one processor may control at least one of the strength or the direction of the current flowing through the coil 405 such that a magnetic field is induced in the first direction 50 inside the core 404. At this time, the direction of the current flowing through the coil 405 may be forward. When the at least one processor controls the strength or the direction of the current flowing through the coil 405 such that a magnetic field is induced in the first direction inside the core 404, the direction of the magnetic force formed by the current and the direction of the basic magnetic force formed by the permanent magnet may be the same. In this case, since the magnetic force of the electromagnet is strengthened to the basic magnetic force, the magnetic force of the magnetic member 40 may be increased. According to an embodiment, in response to determining that the second housing (112 in FIG. 3) is out of the predetermined range relative to the first housing (111 in FIG. 3), the at least one processor may control at least one of the strength or the direction of the current flowing through the coil 405 such that a magnetic field is induced in a direction opposite to the first direction 50 inside the core 404. At this time, the direction of the current flowing through the coil 405 may be reverse. When the at least one processor controls the strength or the direction of the current flowing through the coil 405 such that a magnetic field is induced in a direction opposite to the first direction inside the core 404, the direction of the magnetic force formed by the current and the direction of the basic magnetic force formed by at least one permanent magnet may become different from each other. According to an embodiment, the direction of magnetic force formed by the current may be opposite to the direction of basic magnetic force formed by the permanent magnet. In this case, since the magnetic force of the electromagnet is offset from the basic magnetic force, the magnetic force of the magnetic member 40 may be decreased.

According to an embodiment, the meaning of the phrase "within the predetermined range" may include a case where the position of the second housing (112 in FIG. 3) relative to the first housing (111 in FIG. 3) is within the range D1 or D3 in FIG. 3. According to an embodiment, the meaning of the phrase "outside the predetermined range" may include a case where the position of the second housing (112 in FIG. 3) relative to the first housing (111 in FIG. 3) is within the range D2.

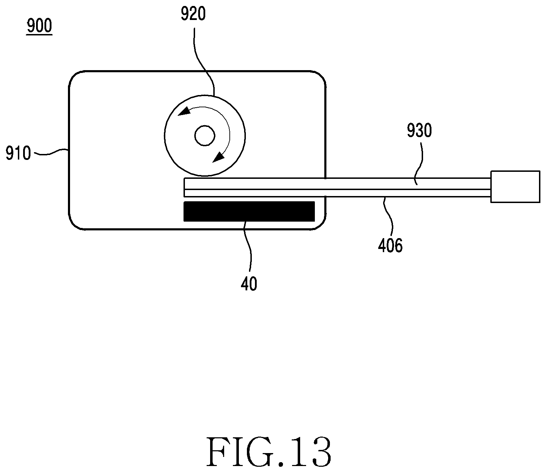

FIG. 13 is a conceptual view illustrating a configuration for adjusting the strength of magnetic force of a magnetic member according to an operation of an electronic device according to an embodiment.

The descriptions made with reference to FIGS. 3 to 5 may be applicable to the configurations of the magnetic member 40 and the supporting block 406. The same reference numerals are used for the same or substantially the same components as those described above, and a redundant description will be omitted.

Referring to FIG. 13, the electronic device 900 may include a driver 920. According to an embodiment, the driver 920 may be configured to move the display 930 relative to the housing 910. According to an embodiment, the display 930 is fastened to the driver 920, which is a guide structure within the housing 910, such that the display 930 is moved into the housing 910 by a slide-in motion or moved out of the housing 910 by a slide-out motion. For example, the housing 910 of the electronic device 900 may have a cylindrical structure such that the flexible display 930 can be rolled along the driver 920 within the housing 910. However, the structure of the housing 910 is not limited thereto.

According to an embodiment, the driver 920 may include a motor and mechanical elements (e.g., a rolling gear) operated by the motor. The motor may be connected to at least one processor of the electronic device 11. The motor may be driven to contract or expand the housing 910 and/or the display 930 in response to a signal from the at least one processor.

In various embodiments of the disclosure, the state in which the display 930 is maximally contracted may be referred to as a contracted state (or a maximally contracted state). The state in which the display 930 is maximally expanded may be referred to as an expanded state (or a maximally expanded state). In addition, when the display 930 is in a state between the maximally expanded state and the maximally contracted state, it may be referred to as an intermediately expanded state (or an intermediate state).

According to an embodiment, the electronic device 900 may include at least one processor electrically connected to the driver 920. When the display 930 is moved into the housing 910 by the slide-in motion or moved out of the housing 910 by the slide-out motion by the driver 920, the at least one processor may control at least one of the strength or the direction of the current flowing through the coil (405 in FIG. 4) of the magnetic member 40. For example, when the display 930 is moved into the housing 910 by the slide-in motion or moved out of the housing 910 by the slide-out motion by the driver 920, the at least one processor may control at least one of the strength or the direction of the current flowing through the coil (405 in FIG. 4) such that a magnetic field is induced in a direction opposite to the first direction inside the core (404 in FIG. 4). When the at least one processor controls the strength or the direction of the current flowing through the coil (405 in FIG. 4) such that a magnetic field is induced in a direction opposite to the first direction inside the core (404 in FIG. 4), the direction of the magnetic force formed by the current and the direction of the basic magnetic force formed by the permanent magnet may become different from each other. According to an embodiment, the direction of magnetic force formed by the current may be opposite to the direction of basic magnetic force formed by the permanent magnet. In this case, since the magnetic force of the electromagnet is offset from the basic magnetic force, the magnetic force of the magnetic member 40 may be decreased.

According to an embodiment, when the operation of the display 930 is stopped by the driver 920 (e.g., the maximally expanded state or the minimally contracted state), the at least one processor may control at least one of the strength or the direction of the current flowing through the coil (405 in FIG. 4) of the magnetic member 40. When the operation of the display 930 is stopped by the driver 920 (e.g., the maximally expanded state or the minimally contracted state), the at least one processor may control at least one of the strength or the direction of the current flowing through the coil (405 in FIG. 4) such that a magnetic field is induced in the first direction inside the core (404 in FIG. 4). When the at least one processor controls the strength or the direction of the current flowing through the coil (405 in FIG. 4) such that a magnetic field is induced in the first direction inside the core (404 in FIG. 4), the direction of the magnetic force formed by the current and the direction of the basic magnetic force formed by the permanent magnet may be the same. In this case, the magnetic force of the electromagnet is strengthened in addition to the basic magnetic force so that the magnetic force of the magnetic member 40 can be increased.

Various embodiments of the disclosure disclosed in the present specification and drawings are provided merely to represent specific examples for the purpose of easily describing the technical contents of the disclosure and helping the understanding of the disclosure

As described above, an electronic device according to an embodiment may include a flexible display, a housing accommodating the flexible display and constituting at least a portion of the exterior of the electronic device, at least one magnetic member disposed inside the housing, and at least one processor. The magnetic member may include a first permanent magnet, and an electromagnet including a core extending in a first direction from one surface of the first permanent magnet and a coil disposed inside the core to induce a magnetic field in the first direction or in a direction opposite to the first direction. With respect to one surface facing the core, the first permanent magnet may have at least one of a height greater than or equal to the height of the one surface or a width greater than or equal to the width of the one surface, and the at least one processor may be configured to control at least one of the strength or the direction of current flowing through the coil.

According to an embodiment, the first permanent magnet may be disposed such that the magnetic force thereof is directed in a second direction forming an inclination angle with the first direction.

According to an embodiment, the magnetic member may further include a second permanent magnet extending from the core in the first direction and disposed in a direction opposite to the first permanent magnet with respect to the core, and with respect to one surface of the core that faces the second permanent magnet, the second permanent magnet may have at least one of a height greater than or equal to the height of the one surface or a width greater than or equal to the width of the one surface.

According to an embodiment, the first permanent magnet may be disposed such that the magnetic force thereof is directed in a second direction forming an inclination angle with the first direction, and the second permanent magnet may be disposed such that the magnetic force thereof is directed in a third direction symmetrical to the second direction with respect to the first direction as an axis.

According to an embodiment, the housing may include a first housing and a second housing coupled to the first housing to be movable within a predetermined range with respect to the first housing, and a display area exposed to outside of the flexible display may be expanded or contracted as the flexible display is moved into or out of the housing by a sliding motion.

According to an embodiment, the electronic device may further include a plurality of supporting blocks arranged on the rear surface of the display. The at least one magnetic member may be disposed in close proximity to at least some of the plurality of supporting blocks, and the plurality of supporting blocks may be arranged such that the plurality of supporting blocks disposed in close proximity to the magnetic member move as the display is moved into or out of the housing by the sliding motion.

According to an embodiment, the plurality of supporting blocks may be arranged with the first direction as a longitudinal direction thereof.

According to an embodiment, the plurality of supporting blocks may include a metal bar.

According to an embodiment, the electronic device may further include a first sensor configured to measure a position of the second housing relative to the first housing, and at least one processor electrically connected to the first sensor, and the at least one processor may be configured to control at least one of the strength or the direction of the current flowing through the coil in response to the position of the second housing relative to the first housing determined by the first sensor.

According to an embodiment, the at least one processor may be configured to control at least one of the strength or the direction of the current flowing through the coil such that a magnetic field is induced in the first direction inside the core when the position of the second housing relative to the first housing is in a first area, to control at least one of the strength or the direction of the current flowing through the coil such that a magnetic field is induced in a direction opposite to the first direction inside the core when the position of the second housing relative to the first housing is in a second area, and to control at least one of the strength or the direction of the current flowing through the coil such that a magnetic field is induced in the first direction inside the core when the position of the second housing relative to the first housing is in a third area.

According to an embodiment, the housing may include a first housing structure and a second housing structure that is foldably connected to the first housing structure. The first housing structure and the second housing structure may include a hinge structure that causes the first housing structure and the second housing structure to substantially face each other when the electronic device is in a folded state and that causes the first housing and the second housing to form a substantially flat surface when the electronic device in an unfolded state, and the flexible display may be disposed in a space defined by the housing and defines a front surface of the electronic device when the electronic device is in the unfolded state.

According to an embodiment, the electronic device may further include a second sensor configured to detect folding of the electronic device, and at least one processor electrically connected to the second sensor. The at least one processor may be configured to control at least one of the strength or the direction of the current flowing through the coil such that a magnetic field is induced in the first direction inside the core in response to determining, by the second sensor, that the electronic device is in the folded state.

According to an embodiment, the electronic device may further include a third sensor configured to detect unfolding of the electronic device, and at least one processor electrically connected to the third sensor. The at least one processor may be configured to control at least one of the strength or the direction of the current flowing through the coil such that a magnetic field is induced in a direction opposite to the first direction inside the core in response to detecting, by the third sensor, the unfolding of the electronic device.

According to an embodiment, the electronic device may include a fourth sensor configured to detect a user's holding state of the electronic device, and at least one processor electrically connected to the fourth sensor. The at least one processor may be configured to control at least one of the strength or the direction of the current flowing through the coil such that a magnetic field is induced in a direction opposite to the first direction inside the core in response to detecting, by the fourth sensor, the user's holding of the electronic device.

According to an embodiment, the electronic device may further include at least one air temperature sensor configured to measure a temperature outside the electronic device, and at least one processor electrically connected to the temperature sensor. The at least one processor may be configured to control at least one of the strength or the direction of the current flowing through the coil based on temperature data obtained from the temperature sensor.

According to an embodiment, the at least one processor may be configured to determine whether a value of the temperature data is less than or equal to a configured value, and to control at least one of the strength or the direction of the current flowing through the coil such that a magnetic field is induced in the first direction inside the core in response to determining that the value of the temperature data is equal to or less than the configured value.

According to an embodiment, the electronic device may further include a touch screen configured to detect a touch by an input pen, and at least one processor electrically connected to the touch screen. The at least one processor may be configured to control at least one of the strength or the direction of the current flowing through the coil such that a magnetic field is induced in a direction opposite to the first direction inside the core when the touch screen detects a touch input.

As described above, a magnetic member according to an embodiment may include a first permanent magnet, and an electromagnet including a core extending in a first direction from one surface of the first permanent magnet and a coil disposed inside the core to induce a magnetic field in the first direction or in a direction opposite to the first direction. With respect to one surface facing the core, the first permanent magnet may have at least one of a height greater than or equal to the height of the one surface or a width greater than or equal to the width of the one surface.

According to an embodiment, the first permanent magnet may be disposed such that the magnetic force thereof is directed in a second direction forming an inclination angle with the first direction.

According to an embodiment, the magnetic member may further include a second permanent magnet extending from the core in the first direction and disposed in a direction opposite to the first permanent magnet with respect to the core, and with respect to one surface facing the core, the second permanent magnet may have at least one of a height greater than or equal to the height of the one surface or a width greater than or equal to the width of the one surface.

According to an embodiment, the first permanent magnet may be disposed such that magnetic force thereof is directed in a second direction forming an inclination angle with the first direction, and the second permanent magnet may be disposed such that magnetic force thereof is directed in a third direction symmetrical to the second direction with respect to the first direction as an axis.

## Claims

1. An electronic device (11) comprising:
a flexible display (120);
a housing (111, 112) accommodating the flexible display (120) and constituting at least a portion of an exterior of the electronic device (11);
at least one magnetic member (40) disposed inside the housing (111, 112); and
at least one processor (820),
wherein the magnetic member (40) comprises:
a first permanent magnet (401); and
an electromagnet (403) comprising a core (404) extending, in a first direction (50), from a first surface of the first permanent magnet (401) and a coil (405) arranged to induce a magnetic field inside the core (404) in the first direction (50) or in a direction opposite to the first direction (50),
wherein the first surface of the first permanent magnet (401) faces a first surface of the core (404), and
wherein at least one of:
a height (401B) of the first surface of the first permanent magnet (401) is greater than or equal to a height of the first surface of the core (404), or
a width (401A) of the first surface of the first permanent magnet (401) is greater than or equal to a width of the first surface of the core (404), and
wherein the at least one processor (820) is configured to control at least one of a strength or a direction of current flowing through the coil (405).

2. The electronic device (11) of claim 1, wherein the first permanent magnet (401) is disposed such that magnetic force thereof is directed in a second direction (60, 70) forming an inclination angle with the first direction (50).

3. The electronic device (11) of any one of claims 1 or 2, wherein the magnetic member (40) further comprises a second permanent magnet (402) extending from the core (404) in the first direction (50) wherein the second permanent magnet (402) has its poles arranged in an opposite manner to the first permanent magnet (401), and
wherein a first surface of the second permanent magnet (402) faces a second surface of the core (404), the second surface of the core (404) facing the first surface of the core (404), and
wherein at least one of:
a height (402B) of the first surface of the second permanent magnet (402) is greater than or equal to a height of the second surface of the core (404), or
a width (402A) of the first surface of the second permanent magnet (402) is greater than or equal to a width of the second surface of the core (404).

4. The electronic device (11) of claim 3, wherein the first permanent magnet (401) is disposed such that magnetic force thereof is directed in a second direction (60) forming an inclination angle with the first direction (50), and
wherein the second permanent magnet (402) is disposed such that magnetic force thereof is directed in a third direction (70) symmetrical to the second direction (60) with respect to the first direction (50) as an axis.

5. The electronic device (11) of any of claims 1 to 4, wherein the housing (111, 112) comprises a first housing (111) and a second housing (112) coupled to the first housing (111) to be movable within a predetermined range with respect to the first housing (111), and
wherein a display area exposed to outside of the flexible display (120) is expanded or contracted as the flexible display (120) is moved into or out of the housing (111, 112) by a sliding motion.

6. The electronic device (11) of claim 5, further comprising a plurality of supporting blocks (406) arranged on a rear surface of the flexible display (120),
wherein the at least one magnetic member (40) is disposed in proximity to at least some of the plurality of supporting blocks (406), and
wherein the plurality of supporting blocks (406) are arranged such that the plurality of supporting blocks (406) disposed in proximity to the magnetic member (40) move as the flexible display (120) is moved into or out of the housing (111, 112) by the sliding motion.

7. The electronic device (11) of claim 6, wherein the plurality of supporting blocks (406) are arranged with the first direction (50) as a longitudinal direction thereof.

8. The electronic device (11) of claim 6, wherein each of the plurality of supporting blocks (406) comprises a metal bar.

9. The electronic device (11) of any of claims 5 to 8, further comprising:
a first sensor (810) configured to measure a position of the second housing (112) relative to the first housing (111); and
at least one processor (820) electrically connected to the first sensor (810),
wherein the at least one processor (820) is configured to control at least one of the strength or the direction of the current flowing through the coil (405) in response to a position of the second housing (112) relative to the first housing (111) determined by the first sensor (810).

10. The electronic device (11) of claim 9, wherein the at least one processor (820) is configured to:
control at least one of the strength or the direction of the current flowing through the coil (405) such that a magnetic field is induced in the first direction (50) inside the core (404) in case that the position of the second housing (112) relative to the first housing (111) is in a first area;
control at least one of the strength or the direction of the current flowing through the coil (405) such that a magnetic field is induced in a direction opposite to the first direction (50) inside the core (404) in case that the position of the second housing (112) relative to the first housing (111) is in a second area; and
control at least one of the strength or the direction of the current flowing through the coil (405) such that a magnetic field is induced in the first direction (50) inside the core (404) in case that the position of the second housing (112) relative to the first housing (111) is in a third area.

11. The electronic device (11) of any one of claims 1 to 10, wherein the housing (500) comprises a first housing structure (510) and a second housing structure (520) that is foldably connected to the first housing structure (510),
wherein the first housing structure (510) and the second housing structure (520) comprise a hinge structure that causes the first housing structure (510) and the second housing structure (520) to substantially face each other in case that the electronic device (11) is in a folded state and that causes the first housing structure (510) and the second housing structure (520) to form a substantially flat surface in case that the electronic device (11) in an unfolded state, and
wherein the flexible display (120) is disposed in a space defined by the housing (500) and defines a front surface of the electronic device (11) in case that the electronic device (11) is in the unfolded state.

12. The electronic device (11) of claim 11, further comprising:
a second sensor (810) configured to detect folding of the electronic device (11); and
at least one processor (820) electrically connected to the second sensor (810),
wherein the at least one processor (820) is configured to control at least one of the strength or the direction of the current flowing through the coil (405) such that a magnetic field is induced in the first direction (50) inside the core (404) in response to determining, by the second sensor (810), that the electronic device (11) is in the folded state.

13. The electronic device (11) of any one of claims 11 or 12, further comprising:
a third sensor (810) configured to detect unfolding of the electronic device (11); and
at least one processor (820) electrically connected to the third sensor (810),
wherein the at least one processor (820) is configured to control at least one of the strength or the direction of the current flowing through the coil (405) such that a magnetic field is induced in a direction opposite to the first direction (50) inside the core (404) in response to detecting, by the third sensor (810), the unfolding of the electronic device (11).

14. The electronic device (11) of any one of claims 11 to 13, further comprising:
a fourth sensor (810) configured to detect a user's holding state of the electronic device (11); and
at least one processor (820) electrically connected to the fourth sensor (810),
wherein the at least one processor (820) is configured to control at least one of the strength or the direction of the current flowing through the coil (405) such that a magnetic field is induced in a direction opposite to the first direction (50) inside the core (404) in response to detecting, by the fourth sensor (810), the user's holding of the electronic device (11).

15. The electronic device (11) of any one of claims 1 to 14, further comprising:
at least one air temperature sensor (810) configured to measure a temperature outside the electronic device (11); and
at least one processor (820) electrically connected to the temperature sensor (810),
wherein the at least one processor (820) is configured to control at least one of the strength or the direction of the current flowing through the coil (405) based on temperature data obtained from the temperature sensor (810).

## Patentansprüche

1. Elektronische Vorrichtung (11), umfassend:
eine flexible Anzeige (120);
ein Gehäuse (111, 112), das die flexible Anzeige (120) aufnimmt und mindestens einen Abschnitt einer Außenseite der elektronischen Vorrichtung (11) bildet;
mindestens ein Magnetelement (40), das im Inneren des Gehäuses (111, 112) angeordnet ist; und
mindestens einen Prozessor (820),
wobei das Magnetelement (40) Folgendes umfasst:
einen ersten Permanentmagneten (401); und
einen Elektromagneten (403), der einen Kern (404), der sich in einer ersten Richtung (50) von einer ersten Fläche des ersten Permanentmagneten (401) erstreckt, und eine Spule (405), die so angeordnet ist, dass sie ein Magnetfeld im Inneren des Kerns (404) in der ersten Richtung (50) oder in einer Richtung entgegengesetzt zu der ersten Richtung (50) induziert, umfasst,
wobei die erste Fläche des ersten Permanentmagneten (401) einer ersten Fläche des Kerns (404) zugewandt ist und
wobei mindestens eines der Folgenden gilt:
eine Höhe (401B) der ersten Fläche des ersten Permanentmagneten (401) ist größer oder gleich einer Höhe der ersten Fläche des Kerns (404) oder
eine Breite (401A) der ersten Fläche des ersten Permanentmagneten (401) ist größer oder gleich einer Breite der ersten Fläche des Kerns (404), und
wobei der mindestens eine Prozessor (820) dazu ausgelegt ist, mindestens eines von einer Stärke oder einer Richtung von durch die Spule (405) fließendem Strom zu steuern.

2. Elektronische Vorrichtung (11) nach Anspruch 1, wobei der erste Permanentmagnet (401) derart angeordnet ist, dass dessen Magnetkraft in eine zweite Richtung (60, 70) gerichtet ist, die mit der ersten Richtung (50) einen Neigungswinkel bildet.

3. Elektronische Vorrichtung (11) nach einem der Ansprüche 1 oder 2, wobei das Magnetelement (40) ferner einen zweiten Permanentmagneten (402) umfasst, der sich von dem Kern (404) in der ersten Richtung (50) erstreckt, wobei die Pole des zweiten Permanentmagneten (402) auf eine dem ersten Permanentmagneten (401) entgegengesetzte Weise angeordnet sind, und
wobei eine erste Fläche des zweiten Permanentmagneten (402) einer zweiten Fläche des Kerns (404) zugewandt ist, wobei die zweite Fläche des Kerns (404) der ersten Fläche des Kerns (404) zugewandt ist, und
wobei mindestens eines der Folgenden gilt:
eine Höhe (402B) der ersten Fläche des zweiten Permanentmagneten (402) ist größer oder gleich einer Höhe der zweiten Fläche des Kerns (404) oder
eine Breite (402A) der ersten Fläche des zweiten Permanentmagneten (402) ist größer oder gleich einer Breite der zweiten Fläche des Kerns (404).

4. Elektronische Vorrichtung (11) nach Anspruch 3, wobei der erste Permanentmagnet (401) derart angeordnet ist, dass dessen Magnetkraft in eine zweite Richtung (60) gerichtet ist, die mit der ersten Richtung (50) einen Neigungswinkel bildet, und
wobei der zweite Permanentmagnet (402) derart angeordnet ist, dass dessen Magnetkraft in eine dritte Richtung (70) symmetrisch zu der zweiten Richtung (60) in Bezug auf die erste Richtung (50) als eine Achse gerichtet ist.

5. Elektronische Vorrichtung (11) nach einem der Ansprüche 1 bis 4, wobei das Gehäuse (111, 112) ein erstes Gehäuse (111) und ein zweites Gehäuse (112), das so an das erste Gehäuse (111) gekoppelt ist, dass es innerhalb eines vorbestimmten Bereichs in Bezug auf das erste Gehäuse (111) beweglich ist, umfasst und
wobei ein Anzeigebereich, der nach außerhalb der flexiblen Anzeige (120) freiliegt, ausgefahren oder eingefahren wird, wenn die flexible Anzeige (120) durch eine Verschiebungsbewegung in das Gehäuse (111, 112) hinein oder aus diesem heraus bewegt wird.

6. Elektronische Vorrichtung (11) nach Anspruch 5, ferner umfassend eine Vielzahl von Stützblöcken (406), die auf einer Rückfläche der flexiblen Anzeige (120) angeordnet ist,
wobei das mindestens eine Magnetelement (40) in der Nähe von mindestens einigen der Vielzahl von Stützblöcken (406) angeordnet ist und
wobei die Vielzahl von Stützblöcken (406) derart angeordnet ist, dass sich die Vielzahl von Stützblöcken (406), die in der Nähe des Magnetelements (40) angeordnet ist, bewegen, wenn die flexible Anzeige (120) durch die Verschiebungsbewegung in das Gehäuse (111, 112) hinein oder aus diesem heraus bewegt wird.

7. Elektronische Vorrichtung (11) nach Anspruch 6, wobei die Vielzahl von Stützblöcken (406) mit der ersten Richtung (50) als eine Längsrichtung davon angeordnet ist.

8. Elektronische Vorrichtung (11) nach Anspruch 6, wobei jeder der Vielzahl von Stützblöcken (406) einen Metallstab umfasst.

9. Elektronische Vorrichtung (11) nach einem der Ansprüche 5 bis 8, ferner umfassend:
einen ersten Sensor (810), der dazu ausgelegt ist, eine Position des zweiten Gehäuses (112) im Verhältnis zu dem ersten Gehäuse (111) zu messen; und
mindestens einen Prozessor (820), der elektrisch mit dem ersten Sensor (810) verbunden ist,
wobei der mindestens eine Prozessor (820) dazu ausgelegt ist, mindestens eines von der Stärke oder der Richtung des durch die Spule (405) fließenden Stroms als Reaktion auf eine Position des zweiten Gehäuses (112) im Verhältnis zu dem ersten Gehäuse (111), die durch den ersten Sensor (810) bestimmt wird, zu steuern.

10. Elektronische Vorrichtung (11) nach Anspruch 9, wobei der mindestens eine Prozessor (820) ausgelegt ist zum:
Steuern von mindestens einem von der Stärke oder der Richtung des durch die Spule (405) fließenden Stroms derart, dass ein Magnetfeld in der ersten Richtung (50) im Inneren des Kerns (404) induziert wird, falls sich die Position des zweiten Gehäuses (112) im Verhältnis zu dem ersten Gehäuse (111) in einem ersten Bereich befindet;
Steuern von mindestens einem von der Stärke oder der Richtung des durch die Spule (405) fließenden Stroms derart, dass ein Magnetfeld in einer Richtung entgegengesetzt zu der ersten Richtung (50) im Inneren des Kerns (404) induziert wird, falls sich die Position des zweiten Gehäuses (112) im Verhältnis zu dem ersten Gehäuse (111) in einem zweiten Bereich befindet; und
Steuern von mindestens einem von der Stärke oder der Richtung des durch die Spule (405) fließenden Stroms derart, dass ein Magnetfeld in der ersten Richtung (50) im Inneren des Kerns (404) induziert wird, falls sich die Position des zweiten Gehäuses (112) im Verhältnis zu dem ersten Gehäuse (111) in einem dritten Bereich befindet.

11. Elektronische Vorrichtung (11) nach einem der Ansprüche 1 bis 10, wobei das Gehäuse (500) eine erste Gehäusestruktur (510) und eine zweite Gehäusestruktur (520), die faltbar mit der ersten Gehäusestruktur (510) verbunden ist, umfasst,
wobei die erste Gehäusestruktur (510) und die zweite Gehäusestruktur (520) eine Gelenkstruktur umfassen, die bewirkt, dass die erste Gehäusestruktur (510) und die zweite Gehäusestruktur (520) im Wesentlichen einander zugewandt sind, falls sich die elektronische Vorrichtung (11) in einem gefalteten Zustand befindet, und die bewirkt, dass die erste Gehäusestruktur (510) und die zweite Gehäusestruktur (520) eine im Wesentlichen ebene Fläche bilden, falls sich die elektronische Vorrichtung (11) in einem entfalteten Zustand befindet, und
wobei die flexible Anzeige (120) in einem Raum angeordnet ist, der durch das Gehäuse (500) definiert ist, und eine Vorderfläche der elektronischen Vorrichtung (11) definiert, falls sich die elektronische Vorrichtung (11) in dem entfalteten Zustand befindet.

12. Elektronische Vorrichtung (11) nach Anspruch 11, ferner umfassend:
einen zweiten Sensor (810), der dazu ausgelegt ist, ein Falten der elektronischen Vorrichtung (11) zu erkennen; und
mindestens einen Prozessor (820), der elektrisch mit dem zweiten Sensor (810) verbunden ist,
wobei der mindestens eine Prozessor (820) dazu ausgelegt ist, mindestens eines von der Stärke oder der Richtung des durch die Spule (405) fließenden Stroms derart zu steuern, dass ein Magnetfeld in der ersten Richtung (50) im Inneren des Kerns (404) als Reaktion darauf induziert wird, dass durch den zweiten Sensor (810) bestimmt wird, dass sich die elektronische Vorrichtung (11) in dem gefalteten Zustand befindet.

13. Elektronische Vorrichtung (11) nach einem der Ansprüche 11 oder 12, ferner umfassend:
einen dritten Sensor (810), der dazu ausgelegt ist, ein Entfalten der elektronischen Vorrichtung (11) zu erkennen; und
mindestens einen Prozessor (820), der elektrisch mit dem dritten Sensor (810) verbunden ist,
wobei der mindestens eine Prozessor (820) dazu ausgelegt ist, mindestens eines von der Stärke oder der Richtung des durch die Spule (405) fließenden Stroms derart zu steuern, dass ein Magnetfeld in einer Richtung entgegengesetzt zu der ersten Richtung (50) im Inneren des Kerns (404) als Reaktion darauf induziert wird, dass durch den dritten Sensor (810) das Entfalten der elektronischen Vorrichtung (11) erkannt wird.

14. Elektronische Vorrichtung (11) nach einem der Ansprüche 11 bis 13, ferner umfassend:
einen vierten Sensor (810), der dazu ausgelegt ist, einen Zustand eines Haltens der elektronischen Vorrichtung (11) durch einen Benutzer zu erkennen; und
mindestens einen Prozessor (820), der elektrisch mit dem vierten Sensor (810) verbunden ist,
wobei der mindestens eine Prozessor (820) dazu ausgelegt ist, mindestens eines von der Stärke oder der Richtung des durch die Spule (405) fließenden Stroms derart zu steuern, dass ein Magnetfeld in einer Richtung entgegengesetzt zu der ersten Richtung (50) im Inneren des Kerns (404) als Reaktion darauf induziert wird, dass durch den vierten Sensor (810) das Halten der elektronischen Vorrichtung (11) durch den Benutzer erkannt wird.

15. Elektronische Vorrichtung (11) nach einem der Ansprüche 1 bis 14, ferner umfassend:
mindestens einen Lufttemperatursensor (810), der dazu ausgelegt ist, eine Temperatur außerhalb der elektronischen Vorrichtung (11) zu messen; und
mindestens einen Prozessor (820), der elektrisch mit dem Temperatursensor (810) verbunden ist,
wobei der mindestens eine Prozessor (820) dazu ausgelegt ist, mindestens eines von der Stärke oder der Richtung des durch die Spule (405) fließenden Stroms auf Grundlage von Temperaturdaten, die von dem Temperatursensor (810) erhalten werden, zu steuern.

## Revendications

1. Dispositif électronique (11), comprenant :
un affichage flexible (120) ;
un boîtier (111, 112) recevant l'affichage flexible (120) et constituant au moins une partie d'un extérieur du dispositif électronique (11) ;
au moins un élément magnétique (40) disposé à l'intérieur du boîtier (111, 112) ; et
au moins un processeur (820),
dans lequel l'élément magnétique (40) comprend :
un premier aimant permanent (401) ; et
un électro-aimant (403) comprenant un noyau (404) s'étendant, dans une première direction (50), à partir d'une première surface du premier aimant permanent (401) et une bobine (405) agencée de façon à induire un champ magnétique à l'intérieur du noyau (404) dans la première direction (50) ou dans une direction opposée à la première direction (50),
dans lequel la première surface du premier aimant permanent (401) est en regard d'une première surface du noyau (404), et
dans lequel au moins un des points suivants s'applique :
une hauteur (401B) de la première surface du premier aimant permanent (401) est supérieure ou égale à une hauteur de la première surface du noyau (404), ou
une largeur (401A) de la première surface du premier aimant permanent (401) est supérieure ou égale à une largeur de la première surface du noyau (404), et
dans lequel l'au moins un processeur (820) est configuré de façon à commander au moins l'une parmi une intensité ou une direction de courant traversant la bobine (405).

2. Dispositif électronique (11) selon la revendication 1, dans lequel le premier aimant permanent (401) est disposé de telle sorte que sa force magnétique soit dirigée dans une deuxième direction (60, 70) formant un angle d'inclinaison avec la première direction (50).

3. Dispositif électronique (11) selon l'une des revendications 1 ou 2, dans lequel l'élément magnétique (40) comprend en outre un deuxième aimant permanent (402) s'étendant à partir du noyau (404) dans la première direction (50), dans lequel le deuxième aimant permanent (402) a ses pôles disposés de manière opposée au premier aimant permanent (401), et
dans lequel une première surface du deuxième aimant permanent (402) est en regard d'une deuxième surface du noyau (404), la deuxième surface du noyau (404) étant en regard de la première surface du noyau (404), et
dans lequel au moins un des points suivants s'applique :
une hauteur (402B) de la première surface du deuxième aimant permanent (402) est supérieure ou égale à une hauteur de la deuxième surface du noyau (404), ou
une largeur (402A) de la première surface du deuxième aimant permanent (402) est supérieure ou égale à une largeur de la deuxième surface du noyau (404).

4. Dispositif électronique (11) selon la revendication 3, dans lequel le premier aimant permanent (401) est disposé de telle sorte que sa force magnétique soit dirigée dans une deuxième direction (60) formant un angle d'inclinaison avec la première direction (50), et
dans lequel le deuxième aimant permanent (402) est disposé de telle sorte que sa force magnétique soit dirigée dans une troisième direction (70) symétrique à la deuxième direction (60) par rapport à la première direction (50) en tant qu'axe.

5. Dispositif électronique (11) selon l'une des revendications 1 à 4, dans lequel le boîtier (111, 112) comprend un premier boîtier (111) et un deuxième boîtier (112) couplé au premier boîtier (111) de façon à être mobile dans une plage prédéterminée par rapport au premier boîtier (111), et
dans lequel une zone d'affichage exposée à l'extérieur de l'affichage flexible (120) est dilatée ou rétrécie lorsque l'affichage flexible (120) est déplacé dans ou hors du boîtier (111, 112) par un mouvement de coulissement.

6. Dispositif électronique (11) selon la revendication 5, comprenant en outre une pluralité de blocs de support (406) disposée sur une face arrière de l'affichage flexible (120),
dans lequel l'au moins un élément magnétique (40) est disposé à proximité d'au moins une partie de la pluralité de blocs de support (406), et
dans lequel la pluralité de blocs de support (406) est agencée de sorte que la pluralité de blocs de support (406) disposée à proximité de l'élément magnétique (40) se déplace lors du déplacement de l'affichage flexible (120) dans ou hors du boîtier (111, 112) par le mouvement de coulissement.

7. Dispositif électronique (11) selon la revendication 6, dans lequel la pluralité de blocs de support (406) est agencée de telle sorte que la première direction (50) soit sa direction longitudinale.

8. Dispositif électronique (11) selon la revendication 6, dans lequel chacune de la pluralité de blocs de support (406) comprend une barre métallique.

9. Dispositif électronique (11) selon l'une des revendications 5 à 8, comprenant en outre :
un premier capteur (810) configuré pour la mesure d'une position du deuxième boîtier (112) par rapport au premier boîtier (111) ; et
au moins un processeur (820) relié électriquement au premier capteur (810),
dans lequel l'au moins un processeur (820) est configuré de façon à commander au moins une parmi l'intensité ou la direction du courant traversant la bobine (405) en réponse à une position du deuxième boîtier (112) par rapport au premier boîtier (111) déterminée par le premier capteur (810).

10. Dispositif électronique (11) selon la revendication 9, dans lequel l'au moins un processeur (820) est configuré de façon à :
commander au moins l'une parmi l'intensité ou la direction du courant traversant la bobine (405) de sorte qu'un champ magnétique soit induit dans la première direction (50) à l'intérieur du noyau (404) dans le cas où la position du deuxième boîtier (112) par rapport au premier boîtier (111) se trouve dans une première zone ;
commander au moins l'une parmi l'intensité ou la direction du courant traversant la bobine (405) de sorte qu'un champ magnétique soit induit dans une direction opposée à la première direction (50) à l'intérieur du noyau (404) dans le cas où la position du deuxième boîtier (112) par rapport au premier boîtier (111) se trouve dans une deuxième zone ; et
commander au moins l'une parmi l'intensité ou la direction du courant traversant la bobine (405) de sorte qu'un champ magnétique soit induit dans la première direction (50) à l'intérieur du noyau (404) dans le cas où la position du deuxième boîtier (112) par rapport au premier boîtier (111) se trouve dans une troisième zone.

11. Dispositif électronique (11) selon l'une des revendications 1 à 10, dans lequel le boîtier (500) comprend une première structure de boîtier (510) et une deuxième structure de boîtier (520) qui est reliée de manière pliable à la première structure de boîtier (510),
dans lequel la première structure de boîtier (510) et la deuxième structure de boîtier (520) comprennent une structure charnière qui amène la première structure de boîtier (510) et la deuxième structure de boîtier (520) à se faire sensiblement face l'une à l'autre dans le cas où le dispositif électronique (11) est dans un état plié et qui amène la première structure de boîtier (510) et la deuxième structure de boîtier (520) à former une surface sensiblement plate dans le cas où le dispositif électronique (11) est dans un état déplié, et
dans lequel l'affichage flexible (120) est disposé dans un espace défini par le boîtier (500) et définit une face avant du dispositif électronique (11) dans le cas où le dispositif électronique (11) est à l'état déplié.

12. Dispositif électronique (11) selon la revendication 11, comprenant en outre :
un deuxième capteur (810) configuré de façon à détecter le repliement du dispositif électronique (11) ; et
au moins un processeur (820) relié électriquement au deuxième capteur (810),
dans lequel l'au moins un processeur (820) est configuré de façon à commander au moins l'une parmi l'intensité ou la direction du courant traversant la bobine (405) de sorte qu'un champ magnétique est induit dans la première direction (50) à l'intérieur du noyau (404) en réponse à la détermination, par le deuxième capteur (810), que le dispositif électronique (11) est à l'état plié.

13. Dispositif électronique (11) selon l'une des revendications 11 ou 12, comprenant en outre :
un troisième capteur (810) configuré de façon à détecter le déploiement du dispositif électronique (11) ; et
au moins un processeur (820) relié électriquement au troisième capteur (810),
dans lequel l'au moins un processeur (820) est configuré de façon à commander au moins l'une parmi l'intensité ou la direction du courant traversant la bobine (405) de sorte qu'un champ magnétique est induit dans une direction opposée à la première direction (50) à l'intérieur du noyau (404) en réponse à la détection, par le troisième capteur (810), du déploiement du dispositif électronique (11).

14. Dispositif électronique (11) selon l'une des revendications 11 à 13, comprenant en outre :
un quatrième capteur (810) configuré de façon à détecter l'état de maintien du dispositif électronique (11) par un utilisateur ; et
au moins un processeur (820) relié électriquement au quatrième capteur (810),
dans lequel l'au moins un processeur (820) est configuré de façon à commander au moins l'une parmi l'intensité ou la direction du courant traversant la bobine (405) de sorte qu'un champ magnétique est induit dans une direction opposée à la première direction (50) à l'intérieur du noyau (404) en réponse à la détection, par le quatrième capteur (810), du maintien du dispositif électronique (11) par l'utilisateur.

15. Dispositif électronique (11) selon l'une des revendications 1 à 14, comprenant en outre :
au moins un capteur de température d'air (810) configuré pour la mesure d'une température à l'extérieur du dispositif électronique (11) ; et
au moins un processeur (820) relié électriquement au capteur de température (810),
dans lequel l'au moins un processeur (820) est configuré de façon à commander au moins l'une parmi l'intensité ou la direction du courant traversant la bobine (405) à partir de données de température obtenues par le capteur de température (810).
